# EUROPEAN PATENT SPECIFICATION

(11) **EP 2 860 880 B1**
(45) Date of publication and mention of the grant of the patent: **15.08.2018**
(21) Application number: 13872759.9
(22) Date of filing: 27.05.2013
(51) Int. Cl.: H04B 5/00, H04B 5/02

(54) **METHOD, DEVICE, AND TERMINAL DEVICE FOR NEAR FIELD COMMUNICATION RADIOFREQUENCY DISCOVERY CONTROL**
VERFAHREN, VORRICHTUNG UND ENDGERÄT ZUR HOCHFREQUENZERKENNUNGSSTEUERUNG ÜBER NAHFELDKOMMUNIKATION
PROCÉDÉ, DISPOSITIF, ET DISPOSITIF TERMINAL DE COMMANDE DE DÉCOUVERTE DE RADIOFRÉQUENCE DE COMMUNICATION EN CHAMP PROCHE

(30) Priority: 24.01.2013 WO PCT/CN2013/070949
(43) Date of publication of application: 15.04.2015
(73) Proprietor: Huawei Device (Dongguan) Co., Ltd., Dongguan, Guangdong 523808 (CN)
(72) Inventor: WANG, Miao, Shenzhen Guangdong 518129 (CN); JIN, Zhihao, Shenzhen Guangdong 518129 (CN); CHANG, Xinmiao, Shenzhen Guangdong 518129 (CN)
(74) Representative: Goddar, Heinz J.
(86) International application number: PCT/CN2013/076272
(87) International publication number: WO 2014/114044

(56) References cited:
- WO-A1-2012/132446
- WO-A1-2012/178107
- CN-A- 1 825 989
- CN-A- 101 305 585
- CN-A- 102 100 121
- US-A1- 2013 005 262

## Description

### TECHNICAL FIELD

Embodiments of the present invention relate to the field of communications, and in particular, to a method, an apparatus, and a terminal device for controlling near field communication radio frequency discovery.

### BACKGROUND

Near field communication (near field communication, NFC for short) is a short-range radio connection technology. It uses magnetic field induction to implement short-range communication between electronic devices based on a radio frequency identification (radio frequency identification, RFID for short) technology. As the NFC technology is popularized gradually, a plurality of electronic products, such as a printer, a television, a sound box, a mobile phone, and a camera, are already integrated with an NFC function.

An NFC device mainly includes the following three functional entities: a device host (device host, DH for short), an NFC controller (NFC controller, NFCC for short), and a secure element (secure element, SE for short). The DH is responsible for management of the NFCC, for example, initialization, configuration, and power management. The NFCC is responsible for physical transmission of data implemented by means of a radio frequency interface and an antenna. The SE may provide a secure execution environment for an NFC application program. An NFC control interface (NFC control interface, NCI for short) is a logical interface for communication between the DH and the NFCC. The DH may communicate with the NFCC by using an NCI protocol. In addition, other communication protocols such as a host controller interface (host controller interface, HCI for short) or the Single Wire Protocol (Single Wire Protocol, SWP for short) may be used for communication between the NFCC and the SE.

The NFC device generally has a single host architecture (single host architecture). In the single host architecture, the NFCC is connected only to the DH, and is not connected to the SE, the DH is connected to the SE, a host of the NFCC is the DH, and the NFCC is controlled only by the DH. With development of the NFC technology, a multi-host architecture (multi-host architecture) is brought forward currently. In the multi-host architecture, the NFCC is separately connected to the DH and one or more SEs; the NFCC is a shared resource, the DH and the SEs connected to the NFCC are all hosts of the NFCC, and both the DH and SEs may control the NFCC to perform NFC radio frequency communication. However, the prior art does not provide a mechanism for the NFCC to perform radio frequency communication when the NFCC is controlled by multiple hosts in the multi-host architecture.

EP2693368A1 discloses a method of controlling a RFID device. The RFID device can handle data accesses from a reader/writer according to a state of an RFID-embedded apparatus.

US2013/0005261A1 discloses a short range wireless communication device capable of, when data communication under plural mutually different data communications protocols compete with one another, effectively executing the data communications under the plural data communication protocols.

### SUMMARY

The present invention provides a method of claim 1 and an NFC host of claim 5, so as to provide a radio frequency communication mechanism in a multi-host architecture. The invention is solely defined by the appended claims and all following aspects and embodiments that do not fall under the scope of the independent claims are mere examples of alternatives which are not part of the claimed invention. According to a first aspect, a method for controlling NFC radio frequency discovery includes:
acquiring, by a first NFC host, state information used to indicate a state of a near field communication controller NFCC; and
if the state of the NFCC is non-idle, and the first NFC host learns, according to identity information of the first NFC host and identity information of a third NFC host, that a priority of the first NFC host is higher than a priority of the third NFC host, sending, by the first NFC host, a state resetting command to the NFCC, so that the NFCC terminates a current radio frequency communication process and restores to an idle state, where the third NFC host is an NFC host corresponding to the radio frequency communication process currently executed by the NFCC, and the identity information of the third NFC host is sent by the NFCC to the first NFC host.

In a first possible implementation manner of the first aspect, after the sending, by the first NFC host, a state resetting command to the NFCC, so that the NFCC terminates a current radio frequency communication process and restores to an idle state, the method further includes:
after the first NFC host receives an idle state notification message sent by the NFCC, sending, by the first NFC host, the first radio frequency discovery command to the NFCC, where the idle state notification message is sent by the NFCC to the first NFC host after the NFCC restores to the idle state.

With reference to the first aspect or the first possible implementation manner of the first aspect, in a second possible implementation manner, after the acquiring, by a first NFC host, state information used to indicate a state of an NFCC, the method further includes:
sending, by the first NFC host, the first radio frequency discovery command to the NFCC if the state of the NFCC is idle.

With reference to the second possible implementation manner of the first aspect, in a third possible implementation manner, after the sending, by the first NFC host, the first radio frequency discovery command to the NFCC if the state of the NFCC is idle, the method further includes:
receiving, by the first NFC host, a first response message that is sent by the NFCC and includes identity information of a second NFC host, where the first response message is sent by the NFCC to the first NFC host when the NFCC receives the first radio frequency discovery command and a second radio frequency discovery command that collides with the first radio frequency discovery command, where the second radio frequency discovery command is sent by the second NFC host to the NFCC; and
if the first NFC host learns, according to the identity information of the first NFC host and the identity information of the second NFC host, that the priority of the first NFC host is higher than a priority of the second NFC host, sending, by the first NFC host, the first radio frequency discovery command to the NFCC again, so that the NFCC executes a radio frequency discovery process according to the first radio frequency discovery command.

With reference to the first aspect or the first possible implementation manner of the first aspect or the second possible implementation manner of the first aspect or the third possible implementation manner of the first aspect, in a fourth possible implementation manner, before the acquiring, by a first NFC host, state information used to indicate a state of an NFCC, the method further includes:
sending, by the first NFC host to the NFCC, a state acquiring request used to acquire the state information; or sending, by the first NFC host, a state notification configuration command to the NFCC, so that the NFCC sends the state information of the NFCC to the first NFC host when the state of the NFCC changes; and
the acquiring, by a first NFC host, state information used to indicate a state of an NFCC, specifically includes: receiving, by the first NFC host, the state information that is sent by the NFCC and used to indicate the state of the NFCC.

With reference to the first aspect or the first possible implementation manner of the first aspect or the second possible implementation manner of the first aspect or the third possible implementation manner of the first aspect, in a fifth possible implementation manner, the acquiring, by a first NFC host, state information used to indicate a state of an NFCC, includes:
receiving, by the first NFC host, the state information that is used to indicate the state of the NFCC and sent by the NFCC when the state of the NFCC changes.

With reference to the first aspect or the first possible implementation manner of the first aspect or the second possible implementation manner of the first aspect or the third possible implementation manner of the first aspect or the fourth possible implementation manner of the first aspect or the fifth possible implementation manner of the first aspect, in a sixth possible implementation manner, the first NFC host is a device host DH, and before the acquiring, by a first NFC host, state information used to indicate a state of an NFCC, the method further includes:
sending, by the first NFC host, priority configuration information used to indicate priorities of all NFC hosts to the NFCC, so that the NFCC sends the priority configuration information to all the NFC hosts except the first NFC host, so that all the other NFC hosts compare priorities of multiple colliding NFC hosts according to the priority configuration information; or
sending, by the first NFC host, priority configuration information used to indicate priorities of all NFC hosts to the NFCC, so that the NFCC compares priorities of multiple colliding NFC hosts according to the priority configuration information.

According to a second aspect, a method for controlling NFC radio frequency discovery includes:
terminating, by a near field communication controller NFCC, a current radio frequency communication process if a state of the NFCC is non-idle, the NFCC receives a first radio frequency discovery command or a state acquiring request sent by a first NFC host, and a priority of the first NFC host is higher than a priority of a third NFC host, where the third NFC host is an NFC host corresponding to the radio frequency communication process currently executed by the NFCC.

In a first possible implementation manner of the second aspect, the method further includes:
sending, by the NFCC according to the state acquiring request that is sent by the first NFC host and used to acquire state information, the state information used to indicate the state of the NFCC to the first NFC host; or
sending, by the NFCC according to a state notification configuration command sent by the first NFC host, state information of the NFCC to the first NFC host when the state of the NFCC changes; or
sending, by the NFCC, state information used to indicate the state of the NFCC to the first NFC host when the state of the NFCC changes.

With reference to the second aspect or the first possible implementation manner of the second aspect, in a second possible implementation manner, the terminating, by an NFCC, a current radio frequency communication process if a state of the NFCC is non-idle, the NFCC receives a first radio frequency discovery command or a state acquiring request sent a the first NFC host, and a priority of the first NFC host is higher than a priority of a third NFC host, specifically includes:
if the state of the NFCC is non-idle, and the NFCC receives the first radio frequency discovery command or the state acquiring request sent by the first NFC host, returning, by the NFCC, a second response message including identity information of the third NFC host to the first NFC host, so that the first NFC host compares the priority of the first NFC host with the priority of the third NFC host, where the third NFC host is the NFC host corresponding to the radio frequency communication process currently executed by the NFCC; and
if the priority of the first NFC host is higher than the priority of the third NFC host, receiving, by the NFCC, a state resetting command sent by the first NFC host, and terminating the current radio frequency communication process according to the state resetting command;
   or
if the state of the NFCC is non-idle, and the NFCC receives the first radio frequency discovery command sent by the first NFC host, comparing, by the NFCC, the priority of the first NFC host with the priority of the third NFC host, and if the priority of the first NFC host is higher than the priority of the third NFC host, terminating, by the NFCC, the current radio frequency communication process, where the third NFC host is the NFC host corresponding to the radio frequency communication process currently executed by the NFCC;
   or
if the state of the NFCC is non-idle, and the NFCC receives the state acquiring request sent by the first NFC host, comparing, by the NFCC, the priority of the first NFC host with the priority of the third NFC host, and if the priority of the first NFC host is higher than the priority of the third NFC host, terminating, by the NFCC, the current radio frequency communication process, where the third NFC host is the NFC host corresponding to the radio frequency communication process currently executed by the NFCC.

With reference to the second aspect or the first possible implementation manner of the second aspect, in a third possible implementation manner, after the terminating, by an NFCC, a current radio frequency communication process, the method further includes:
executing, by the NFCC, a radio frequency discovery process according to the first radio frequency discovery command sent by the first NFC host.

With reference to the third possible implementation manner of the second aspect, in a fourth possible implementation manner, the terminating, by an NFCC, a current radio frequency communication process if a state of the NFCC is non-idle, the NFCC receives a first radio frequency discovery command or a state acquiring request sent by a first NFC host, and a priority of the first NFC host is higher than a priority of a third NFC host, and executing, by the NFCC, a radio frequency discovery process according to the first radio frequency discovery command sent by the first NFC host, specifically include:
if the state of the NFCC is non-idle, and the NFCC receives the first radio frequency discovery command or the state acquiring request sent by the first NFC host, returning, by the NFCC, a second response message including identity information of the third NFC host to the first NFC host, so that the first NFC host compares the priority of the first NFC host with the priority of the third NFC host, where the third NFC host is the NFC host corresponding to the radio frequency communication process currently executed by the NFCC;
if the priority of the first NFC host is higher than the priority of the third NFC host, receiving, by the NFCC, a state resetting command sent by the first NFC host, and terminating the current radio frequency communication process according to the state resetting command; and
sending, by the NFCC after the NFCC terminates the current radio frequency communication process, an idle state notification message to the first NFC host, and receiving the first radio frequency discovery command that is sent by the first NFC host according to the idle state notification message, and executing the radio frequency discovery process according to the first radio frequency discovery command;
   or
if the state of the NFCC is non-idle, and the NFCC receives the first radio frequency discovery command sent by the first NFC host, comparing, by the NFCC, the priority of the first NFC host with the priority of the third NFC host, and if the priority of the first NFC host is higher than the priority of the third NFC host, terminating, by the NFCC, the current radio frequency communication process, and executing the radio frequency discovery process according to the first radio frequency discovery command sent by the first NFC host, where the third NFC host is the NFC host corresponding to the radio frequency communication process currently executed by the NFCC;
   or
if the state of the NFCC is non-idle, and the NFCC receives the state acquiring request sent by the first NFC host, comparing, by the NFCC, the priority of the first NFC host with the priority of the third NFC host; if the priority of the first NFC host is higher than the priority of the third NFC host, terminating, by the NFCC, the current radio frequency communication process, and sending an idle state notification message to the first NFC host, so that the first NFC host sends the first radio frequency discovery command to the NFCC; and executing, by the NFCC, the radio frequency discovery process according to the first radio frequency discovery command sent by the first NFC host, where the third NFC host is the NFC host corresponding to the radio frequency communication process currently executed by the NFCC.

With reference to the second aspect or the first possible implementation manner of the second aspect, in a fifth possible implementation manner, the method further includes:
executing, by the NFCC, a radio frequency discovery process according to the first radio frequency discovery command if the state of the NFCC is idle, the NFCC receives the first radio frequency discovery command sent by the first NFC host and a second radio frequency discovery command that is sent by a second NFC host and collides with the first radio frequency discovery command, and the priority of the first NFC host is higher than a priority of the second NFC host.

With reference to the fifth possible implementation manner of the second aspect, in a sixth possible implementation manner, the executing, by the NFCC, a radio frequency discovery process according to the first radio frequency discovery command if the state of the NFCC is idle, the NFCC receives the first radio frequency discovery command sent by the first NFC host and a second radio frequency discovery command that is sent by a second NFC host and collides with the first radio frequency discovery command, and the priority of the first NFC host is higher than a priority of the second NFC host, specifically includes:
if the state of the NFCC is idle, and the NFCC receives the first radio frequency discovery command sent by the first NFC host and the second radio frequency discovery command that is sent by the second NFC host and collides with the first radio frequency discovery command, sending, by the NFCC, a first response message including identity information of the second NFC host to the first NFC host, so that the first NFC host compares the priority of the first NFC host with the priority of the second NFC host according to identity information of the first NFC host and the identity information of the second NFC host; and
if the priority of the first NFC host is higher than the priority of the second NFC host, receiving, by the NFCC, the first radio frequency discovery command sent by the first NFC again, and executing the radio frequency discovery process according to the first radio frequency discovery command.

With reference to the fifth possible implementation manner of the second aspect, in a seventh possible implementation manner, the executing, by the NFCC, a radio frequency discovery process according to the first radio frequency discovery command if the state of the NFCC is idle, the NFCC receives the first radio frequency discovery command sent by the first NFC host and a second radio frequency discovery command that is sent by a second NFC host and collides with the first radio frequency discovery command, and the priority of the first NFC host is higher than a priority of the second NFC host, specifically includes:
if the state of the NFCC is idle, and the NFCC receives the first radio frequency discovery command sent by the first NFC host and the second radio frequency discovery command that is sent by the second NFC host and collides with the first radio frequency discovery command, comparing, by the NFCC, the priority of the first NFC host with the priority of the second NFC host, and executing the radio frequency discovery process according to a radio frequency discovery command sent by an NFC host of a higher priority.

According to a third aspect, a method for controlling NFC radio frequency discovery includes:
sending, by a first NFC host, a first radio frequency discovery command to a near field communication controller NFCC; and
if a state of the NFCC is non-idle, and the first NFC host learns, according to identity information of the first NFC host and identity information of a third NFC host, that a priority of the first NFC host is higher than a priority of the third NFC host, sending, by the first NFC host, a state resetting command to the NFCC, so that the NFCC terminates a current radio frequency communication process and restores to an idle state, where the third NFC host is an NFC host corresponding to the radio frequency communication process currently executed by the NFCC, and the identity information of the third NFC host is sent by the NFCC to the first NFC host in the radio frequency communication process performed by the third NFC host using the NFCC.

In a first possible implementation manner of the third aspect, after the sending, by the first NFC host, a state resetting command to the NFCC, so that the NFCC terminates a current radio frequency communication process and restores to an idle state, the method further includes:
after the first NFC host receives an idle state notification message sent by the NFCC, sending, by the first NFC host, the first radio frequency discovery command to the NFCC again, where the idle state notification message is sent by the NFCC to the first NFC host after the NFCC restores to the idle state.

With reference to the third aspect or the first possible implementation manner of the third aspect, in a second possible implementation manner, after the sending, by a first NFC host, a first radio frequency discovery command to an NFCC, the method further includes:
sending, by the first NFC, the first radio frequency discovery command to the NFCC again if the state of the NFCC is idle, the NFCC further receives a second radio frequency discovery command that is sent by a second NFC host and collides with the first radio frequency discovery command, and the priority of the first NFC host is higher than a priority of the second NFC host, so that the NFCC executes a radio frequency discovery process according to the first radio frequency discovery command.

With reference to the second possible implementation manner of the third aspect, in a third possible implementation manner, the sending, by the first NFC, the first radio frequency discovery command to the NFCC again if the state of the NFCC is idle, the NFCC further receives a second radio frequency discovery command that is sent by a second NFC host and collides with the first radio frequency discovery command, and the priority of the first NFC host is higher than a priority of the second NFC host, specifically includes:
receiving, by the first NFC host, a first response message that is sent by the NFCC and includes identity information of the second NFC host if the state of the NFCC is idle, and the NFCC receives the first radio frequency discovery command and the second radio frequency discovery command that is sent by the second NFC host and collides with the first radio frequency discovery command; and
sending, by the first NFC, the first radio frequency discovery command to the NFCC again if the first NFC host learns, according to the identity information of the first NFC host and the identity information of the second NFC host, that the priority of the first NFC host is higher than the priority of the second NFC host.

According to a fourth aspect, an NFC host includes:
a first receiving module, configured to acquire state information used to indicate a state of a near field communication controller NFCC; and
a first sending module, configured to: after the first receiving module acquires the state information used to indicate the state of the NFCC, skip sending a first radio frequency discovery command to the NFCC if the state of the NFCC is non-idle; or configured to: after the first receiving module acquires the state information used to indicate the state of the NFCC, if the state of the NFCC is non-idle, and a first NFC host learns, according to identity information of the first NFC host and identity information of a third NFC host, that a priority of the first NFC host is higher than a priority of the third NFC host, send a state resetting command to the NFCC, so that the NFCC terminates a current radio frequency communication process and restores to an idle state, where the third NFC host is an NFC host corresponding to the radio frequency communication process currently executed by the NFCC, and the identity information of the third NFC host is sent by the NFCC to the first NFC host in the radio frequency communication process performed by the third NFC host using the NFCC, where
the NFC host is the first NFC host.

In a first possible implementation manner of the fourth aspect,
the first receiving module is further configured to: after the first sending module sends the state resetting command to the NFCC, receive an idle state notification message sent by the NFCC, where the idle state notification message is sent by the NFCC to the first NFC host after the NFCC restores to the idle state; and
the first sending module is further configured to send the first radio frequency discovery command to the NFCC after the first receiving module receives the idle state notification message.

With reference to the fourth aspect or the first possible implementation manner of the fourth aspect, in a second possible implementation manner, the first sending module is further configured to: after the first receiving module acquires the state information used to indicate the state of the NFCC, send the first radio frequency discovery command to the NFCC if the state of the NFCC is idle.

With reference to the second possible implementation manner of the fourth aspect, in a third possible implementation manner, the NFC host further includes a first comparing module, where:
the first receiving module is further configured to: after the first sending module sends the first radio frequency discovery command to the NFCC, receive a first response message that is sent by the NFCC and includes identity information of a second NFC host, where the first response message is sent by the NFCC to the first NFC host when the NFCC receives the first radio frequency discovery command and a second radio frequency discovery command that collides with the first radio frequency discovery command, where the second radio frequency discovery command is sent by the second NFC host to the NFCC;
the first comparing module is configured to compare the priority of the first NFC host with a priority of the second NFC host according to the identity information of the first NFC host and the identity information of the second NFC host; and
the first sending module is further configured to: if the first comparing module learns that the priority of the first NFC host is higher than the priority of the second NFC host, send the first radio frequency discovery command to the NFCC again, so that the NFCC executes a radio frequency discovery process according to the first radio frequency discovery command.

With reference to the fourth aspect or the first possible implementation manner of the fourth aspect or the second possible implementation manner of the fourth aspect or the third possible implementation manner of the fourth aspect, in a fourth possible implementation manner,
the first sending module is further configured to: before the first receiving module acquires the state information used to indicate the state of the NFCC, send to the NFCC a state acquiring request used to acquire the state information; or is further configured to: before the first receiving module acquires the state information used to indicate the state of the NFCC, send a state notification configuration command to the NFCC, so that the NFCC sends the state information of the NFCC to the first NFC host when the state of the NFCC changes; and
the first receiving module is specifically configured to receive the state information that is sent by the NFCC and used to indicate the state of the NFCC.

With reference to the fourth aspect or the first possible implementation manner of the fourth aspect or the second possible implementation manner of the fourth aspect or the third possible implementation manner of the fourth aspect, in a fifth possible implementation manner, the first receiving module is specifically configured to receive the state information that is used to indicate the state of the NFCC and sent by the NFCC when the state of the NFCC changes.

According to a fifth aspect, an NFCC includes a second sending module, a second receiving module, and a second executing module, where:
the NFCC performs communication externally by using the second sending module and the second receiving module; and
the second executing module is configured to terminate a current radio frequency communication process if a state of the NFCC is non-idle, the second receiving module receives a first radio frequency discovery command or a state acquiring request sent by a first NFC host, and a priority of the first NFC host is higher than a priority of a third NFC host, where the third NFC host is an NFC host corresponding to the radio frequency communication process currently executed by the NFCC.

In a first possible implementation manner of the fifth aspect, the second sending module is configured to:
send, according to the state acquiring request that is sent by the first NFC host and used to acquire state information, the state information used to indicate the state of the NFCC to the first NFC host; or
send, according to a state notification configuration command sent by the first NFC host, state information of the NFCC to the first NFC host when the state of the NFCC changes; or
send state information used to indicate the state of the NFCC to the first NFC host when the state of the NFCC changes.

With reference to the fifth aspect or the first possible implementation manner of the fifth aspect, in a second possible implementation manner of the fifth aspect,
the second sending module is further configured to: if the state of the NFCC is non-idle, and the second receiving module receives the first radio frequency discovery command or the state acquiring request sent by the first NFC host, send a second response message including identity information of the third NFC host to the first NFC host, so that the first NFC host compares the priority of the first NFC host with the priority of the third NFC host, where the third NFC host is the NFC host corresponding to the radio frequency communication process currently executed by the NFCC;
the second receiving module is further configured to receive a state resetting command sent by the first NFC host if the priority of the first NFC host is higher than the priority of the third NFC host; and
the second executing module is specifically configured to terminate the current radio frequency communication process according to the state resetting command received by the second receiving module, and restore the NFCC to an idle state.

With reference the fifth aspect or the first possible implementation manner of the fifth aspect, in a third possible implementation manner of the fifth aspect, the NFCC further includes a third comparing module, where:
the third comparing module is configured to compare the priority of the first NFC host with the priority of the third NFC host if the state of the NFCC is non-idle, and the second receiving module receives the first radio frequency discovery command or the state acquiring request sent by the first NFC host; and
the second executing module is further configured to terminate the current radio frequency communication process if the third comparing module learns that the priority of the first NFC host is higher than the priority of the third NFC host, where the third NFC host is the NFC host corresponding to the radio frequency communication process currently executed by the NFCC.

With reference to the fifth aspect or the first possible implementation manner of the fifth aspect, in a fourth possible implementation manner of the fifth aspect, the second executing module is further configured to: after terminating the current radio frequency communication process, execute a radio frequency discovery process according to the first radio frequency discovery command sent by the first NFC host.

With reference to the fourth possible implementation manner of the fifth aspect, in a fifth possible implementation manner,
the second sending module is further configured to: if the state of the NFCC is non-idle, and the second receiving module receives the first radio frequency discovery command or the state acquiring request sent by the first NFC host, send a second response message including identity information of the third NFC host to the first NFC host, so that the first NFC host compares the priority of the first NFC host with the priority of the third NFC host, where the third NFC host is the NFC host corresponding to the radio frequency communication process currently executed by the NFCC;
the second receiving module is further configured to receive a state resetting command sent by the first NFC host if the priority of the first NFC host is higher than the priority of the third NFC host;
the second executing module is specifically configured to terminate the current radio frequency communication process according to the state resetting command received by the second receiving module, and restore the NFCC to an idle state;
the second sending module is further configured to send an idle state notification message to the first NFC host after the NFCC restores to the idle state;
the second receiving module is further configured to receive the first radio frequency discovery command that is sent by the first NFC host according to the idle state notification message; and
the second executing module is specifically configured to execute the radio frequency discovery process according to the first radio frequency discovery command that is received by the second receiving module after the NFCC restores to the idle state.

With reference to the fourth possible implementation manner of the fifth aspect, in a fifth possible implementation manner, the NFCC further includes a third comparing module, where:
the third comparing module is configured to compare the priority of the first NFC host with the priority of the third NFC host if the state of the NFCC is non-idle, and the second receiving module receives the first radio frequency discovery command or the state acquiring request sent by the first NFC host; and
the second executing module is further configured to: if the third comparing module learns that the priority of the first NFC host is higher than the priority of the third NFC host, terminate the current radio frequency communication process, and execute the radio frequency discovery process according to the first radio frequency discovery command sent by the first NFC host, where the third NFC host is the NFC host corresponding to the radio frequency communication process currently executed by the NFCC.

With reference to the fifth aspect or the first possible implementation manner of the fifth aspect, in a sixth possible implementation manner, the second executing module is further configured to execute a radio frequency discovery process according to the first radio frequency discovery command if the state of the NFCC is idle, the second receiving module receives the first radio frequency discovery command sent by the first NFC host and a second radio frequency discovery command that is sent by a second NFC host and collides with the first radio frequency discovery command, and the priority of the first NFC host is higher than a priority of the second NFC host.

With reference to the sixth possible implementation manner of the fifth aspect, in a seventh possible implementation manner,
the second sending module is further configured to: if the state of the NFCC is idle, and the second receiving module receives the first radio frequency discovery command sent by the first NFC host and the second radio frequency discovery command that is sent by the second NFC host and collides with the first radio frequency discovery command, send a first response message including identity information of the second NFC host to the first NFC host, so that the first NFC host compares the priority of the first NFC host with the priority of the second NFC host according to identity information of the first NFC host and the identity information of the second NFC host;
the second receiving module is further configured to receive the first radio frequency discovery command sent by the first NFC host again if the priority of the first NFC host is higher than the priority of the second NFC host; and
the second executing module is configured to execute the radio frequency discovery process according to the first radio frequency discovery command received by the second receiving module again.

With reference to the sixth possible implementation manner of the fifth aspect, in a seventh possible implementation manner, the NFCC further includes a second comparing module, where:
the second comparing module is configured to compare the priority of the first NFC host with the priority of the second NFC host if the state of the NFCC is idle, and the second receiving module receives the first radio frequency discovery command sent by the first NFC host and the second radio frequency discovery command that is sent by the second NFC host and collides with the first radio frequency discovery command; and
the second executing module is configured to execute the radio frequency discovery process according to a radio frequency discovery command sent by an NFC host of a higher priority learned by the second comparing module.

According to a sixth aspect, an NFC host includes a third sending module and a third receiving module, where: the NFC host performs communication externally by using the third sending module and the third receiving module;
the third sending module is configured to send a first radio frequency discovery command to a near field communication controller NFCC; and
the third sending module is further configured to: after the first radio frequency discovery command is sent to the NFCC, if a state of the NFCC is non-idle, and a first NFC host learns, according to identity information of the first NFC host and identity information of a third NFC host, that a priority of the first NFC host is higher than a priority of the third NFC host, send a state resetting command to the NFCC, so that the NFCC terminates a current radio frequency communication process and restores to an idle state, where the third NFC host is an NFC host corresponding to the radio frequency communication process currently executed by the NFCC, and the identity information of the third NFC host is sent by the NFCC to the first NFC host in the radio frequency communication process performed by the third NFC host using the NFCC, where
the NFC host is the first NFC host.

In a first possible implementation manner of the sixth aspect,
the third receiving module is further configured to receive an idle state notification message sent by the NFCC after the NFCC restores to the idle state; and
the third sending module is further configured to send the first radio frequency discovery command to the NFCC after the third receiving module receives the idle state notification message.

With reference to the sixth aspect or the first possible implementation manner of the sixth aspect, in a second possible implementation manner, the third sending module is further configured to: if the state of the NFCC is idle, the NFCC further receives a second radio frequency discovery command that is sent by a second NFC host and collides with the first radio frequency discovery command, and the priority of the first NFC host is higher than a priority of the second NFC host, send the first radio frequency discovery command to the NFCC again, so that the NFCC executes a radio frequency discovery process according to the first radio frequency discovery command.

With reference to the second possible implementation manner of the sixth aspect, in a third possible implementation manner, the NFC host further includes a fourth comparing module, where:
the third receiving module is further configured to: if the state of the NFCC is idle, and the NFCC receives the first radio frequency discovery command and the second radio frequency discovery command that is sent by the second NFC host and collides with the first radio frequency discovery command, receive a first response message that is sent by the NFCC and includes identity information of the second NFC host;
the fourth comparing module is configured to compare the priority of the first NFC host with the priority of the second NFC host according to the identity information of the first NFC host and the identity information of the second NFC host; and
the third sending module is specifically configured to send the first radio frequency discovery command to the NFCC again if the fourth comparing module learns that the priority of the first NFC host is higher than the priority of the second NFC host.

According to a seventh aspect, a terminal device includes a first NFC host, a third NFC host, and an NFCC, where:
the first NFC host is configured to acquire state information used to indicate a state of the NFCC;
the first NFC host is further configured to: if the acquired state of the NFCC is non-idle, skip sending a first radio frequency discovery command to the NFCC; or is further configured to: if the acquired state of the NFCC is non-idle, and the first NFC host learns, according to identity information of the first NFC host and identity information of the third NFC host, that a priority of the first NFC host is higher than a priority of the third NFC host, send a state resetting command to the NFCC, so that the NFCC terminates a current radio frequency communication process and restores to an idle state, where the third NFC host is an NFC host corresponding to the radio frequency communication process currently executed by the NFCC, and the identity information of the third NFC host is sent by the NFCC to the first NFC host in the radio frequency communication process performed by the third NFC host using the NFCC; and
the NFCC is configured to terminate the current radio frequency communication process if the state of the NFCC is non-idle, the NFCC receives a first radio frequency discovery command or a state acquiring request sent by the first NFC host, and the priority of the first NFC host is higher than the priority of the third NFC host.

In a first possible implementation manner of the seventh aspect,
the first NFC host is further configured to: after sending the state resetting command to the NFCC, so that the NFCC terminates the current radio frequency communication process, receive an idle state notification message sent by the NFCC, and send the first radio frequency discovery command to the NFCC, where the idle state notification message is sent by the NFCC to the first NFC host after the NFCC restores to the idle state; and
the NFCC is further configured to: after terminating the current radio frequency communication process, execute a radio frequency discovery process according to the first radio frequency discovery command sent by the first NFC host.

With reference to the first possible implementation manner of the seventh aspect, in a second possible implementation manner, the terminal device further includes a second NFC host, where:
the first NFC host is further configured to: if the state of the NFCC is idle, after sending the first radio frequency discovery command to the NFCC, receive a first response message that is sent by the NFCC and includes identity information of the second NFC host, where the first response message is sent by the NFCC to the first NFC host when the NFCC receives the first radio frequency discovery command and a second radio frequency discovery command that collides with the first radio frequency discovery command, where the second radio frequency discovery command is sent by the second NFC host to the NFCC;
the first NFC host is further configured to: if it is learned, according to the identity information of the first NFC host and the identity information of the second NFC host, that the priority of the first NFC host is higher than a priority of the second NFC host, send the first radio frequency discovery command to the NFCC again, so that the NFCC executes the radio frequency discovery process according to the first radio frequency discovery command; and
the NFCC is further configured to execute the radio frequency discovery process according to the first radio frequency discovery command if the state of the NFCC is idle, the NFCC receives the first radio frequency discovery command sent by the first NFC host and the second radio frequency discovery command that is sent by the second NFC host and collides with the first radio frequency discovery command, and the priority of the first NFC host is higher than the priority of the second NFC host.

According to an eighth aspect, a terminal device includes any one of the foregoing first NFC hosts and any one of the foregoing NFCCs, and further includes a second NFC host or a third NFC host.

The embodiments of the present invention provide a radio frequency communication mechanism of an NFC device in a multi-host architecture. When a first NFC host learns that a state of an NFCC is non-idle, the first NFC host may not send a radio frequency discovery command to the NFCC, and may also control the NFCC to terminate a current radio frequency communication process. Therefore, a collision problem that occurs in the multi-host architecture when an NFC host controls the NFCC to perform radio frequency communication may be avoided.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a method for controlling NFC radio frequency discovery according to an embodiment of the present invention;
FIG. 2 is a flowchart of another method for controlling NFC radio frequency discovery according to an embodiment of the present invention;
FIG. 3 is a flowchart of another method for controlling NFC radio frequency discovery according to an embodiment of the present invention;
FIG. 4A and FIG. 4B are a flowchart of another method for controlling NFC radio frequency discovery according to an embodiment of the present invention;
FIG. 5 is a flowchart of another method for controlling NFC radio frequency discovery according to an embodiment of the present invention;
FIG. 6A and FIG. 6B are a flowchart of another method for controlling NFC radio frequency discovery according to an embodiment of the present invention;
FIG. 7A and FIG. 7B are a flowchart of another method for controlling NFC radio frequency discovery according to an embodiment of the present invention;
FIG. 8 is a flowchart of another method for controlling NFC radio frequency discovery according to an embodiment of the present invention;
FIG. 9 is a schematic structural diagram of a terminal device according to an embodiment of the present invention;
FIG. 10 is a schematic structural diagram of an NFC host according to an embodiment of the present invention;
FIG. 11 is a schematic structural diagram of another NFC host according to an embodiment of the present invention;
FIG. 12 is a schematic structural diagram of an NFCC;
FIG. 13 is a schematic structural diagram of another NFC host according to an embodiment of the present invention;
FIG. 14 is a schematic structural diagram of another NFC host according to an embodiment of the present invention; and
FIG. 15 is a schematic structural diagram of another NFCC.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

It should be understood that ordinal numbers such as "first" and "second", if mentioned in the embodiments of the present invention, are only used for distinguishing, unless the ordinal numbers definitely represent a sequence according to context.

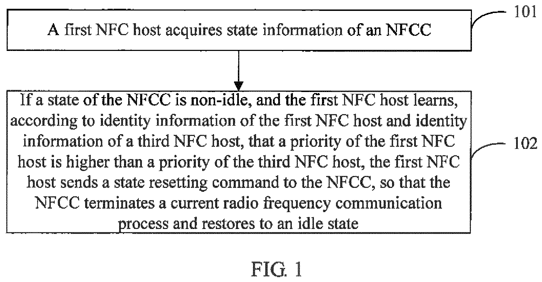

FIG. 1 is a flowchart of a method for controlling NFC radio frequency discovery according to an embodiment of the present invention. As shown in FIG. 1, the method includes:
Step 101: A first NFC host acquires state information of an NFCC, where the state information of the NFCC is used to indicate a state of the NFCC.

An NFC device mainly includes a DH (device host), an NFCC (NFC controller), and an SE (secure element). The DH is responsible for management of the NFCC. The NFCC is responsible for data transmission by using a radio frequency interface and an antenna. The SE may provide a secure execution environment for an NFC application program. In a multi-host architecture, both the DH and the SE may control the NFCC to perform radio frequency communication, that is, both the DH and the SE may be an NFC host. In the embodiments of the present invention, the NFC hosts include a DH and an SE, that is, the NFC host may be the DH or the SE.

The NFCC may have multiple states, for example, the following 7 states: 1. an idle state (RFST_IDLE), where a radio frequency communication state of the NFCC may be idle after the DH and NFCC are successfully initialized; 2. a state of executing radio frequency discovery (RFST_DISCOVERY), which is a state in which the NFCC initiates a radio frequency discovery process according to a radio frequency discovery command, and executes the radio frequency discovery process according to a discovery configuration (discovery configuration); 3. a state of discovering multiple remote devices (remote NFC endpoints) (RFST_W4_ALL_DISCOVERIES), which is a state in which the NFCC discovers multiple remote devices or one remote device; 4. a state of selection performed by a host (RFST_W4_HOST_SELECT), which is a state of waiting for the NFC host to select a remote device after the NFCC discovers multiple remote devices; 5. a polling state after activation (RFST_POLL_ACTIVE), which is a state in which the NFCC is activated and is in a polling mode; 6. a listening state after activation (RFST_LISTEN_ACTIVE), which is a state in which the NFCC is activated and is in a listening mode; and 7. a sleep state (RFST_LISTEN_SLEEP), where the NFCC changes to the sleep state when the NFCC detects no content for a long time in the listening state after activation. The remote NFC endpoint (remote NFC endpoint) may be an NFC device, and may also indicate an NFC tag.

It should be noted that a radio frequency communication process in each embodiment of the present invention includes: all processes from the radio frequency discovery process initiated by the NFCC to termination of radio frequency communication performed by the NFCC with the remote device, that is, in the radio frequency communication process, the NFCC may be in any one state of the foregoing states 2 to 6; the radio frequency discovery process in each embodiment of the present invention refers to a process in which the NFCC initiates and executes radio frequency discovery according to the radio frequency discovery command of the NFC host, that is, in the radio frequency discovery process, the state of the NFCC may be the foregoing state 2. The radio frequency communication process includes the radio frequency discovery process.

The NFCC may send the state information indicating the state of the NFCC to the NFC host.

The NFCC may report the state information to the NFC host according to a request of the NFC host. For example, the NFC host may request current state information of the NFCC from the NFCC according to a requirement, or the NFC host may configure the NFCC so that the NFCC reports the state information to the NFC host when the state of the NFCC changes. Alternatively, the NFC host may also acquire the state information of the NFCC in other manners. For example, the NFC host acquires the state information of the NFCC from another host or server.

The NFCC may also actively send the state information to the NFC host when the state of the NFCC changes.

Step 102: If the state of the NFCC is non-idle, and the first NFC host learns, according to identity information of the first NFC host and identity information of a third NFC host, that a priority of the first NFC host is higher than a priority of the third NFC host, the first NFC host sends a state resetting command to the NFCC, so that the NFCC terminates a current radio frequency communication process and restores to an idle state.

The third NFC host is an NFC host corresponding to the radio frequency communication process currently executed by the NFCC, and the identity information of the third NFC host is sent by the NFCC to the first NFC host in the radio frequency communication process performed by the third NFC host using the NFCC.

Optionally, step 120 may be replaced with step 102'. Step 102' is: If the state of the NFCC is non-idle, the first NFC host does not send a first radio frequency discovery command to the NFCC.

After receiving the state information of the NFCC, the first NFC host may decide a next-step operation according to a current state of the NFCC.

When the state of the NFCC is non-idle, it indicates that the NFCC is currently executing radio frequency communication controlled by another NFC host (the third NFC host). In the process in which the NFCC executes radio frequency communication controlled by the third NFC host, the NFCC may send the identity information of the third NFC host to the first NFC host. Therefore, the first NFC host may compare the priority of the first NFC host with the priority of the third NFC host according to the identity information. When the priority of the first NFC host is higher than the priority of the third NFC host, the first NFC host may terminate the radio frequency communication process currently performed by the NFCC, so that the NFCC restores to the idle state (corresponding to step 102). After the NFCC restores to the idle state, the first NFC host may control the NFCC to perform radio frequency communication.

Alternatively, when the state of the NFCC is non-idle, the first NFC host may not send the radio frequency discovery command to the NFCC to avoid a collision (corresponding to step 102').

When the state of the NFCC is idle, it indicates that the NFCC does not execute a radio frequency communication process currently, and the first NFC host may send the first radio frequency discovery command to the NFCC, so that the NFCC may execute the radio frequency discovery process according to the radio frequency discovery command.

The embodiment of the present invention provides a radio frequency communication mechanism of an NFC device in a multi-host architecture. When a first NFC host learns that a state of an NFCC is non-idle, the first NFC host may not send a radio frequency discovery command to the NFCC, and may also control the NFCC to terminate a current radio frequency communication process. Therefore, a collision problem that occurs in the multi-host architecture when an NFC host controls the NFCC to perform radio frequency communication may be avoided.

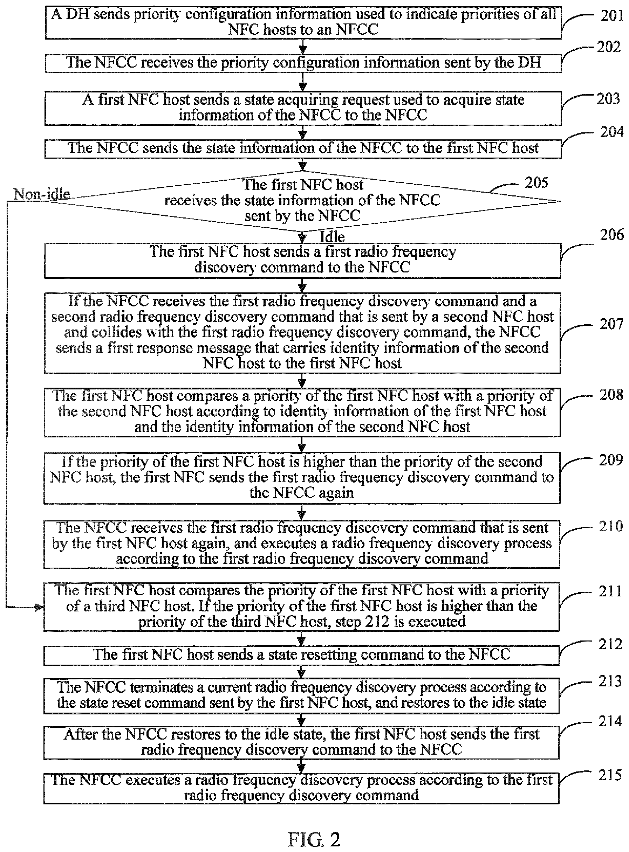

FIG. 2 is a flowchart of another method for controlling NFC radio frequency discovery according to an embodiment of the present invention. On the basis of the embodiment shown in FIG. 1, as shown in FIG. 2, the method includes:
Step 201: A DH sends priority configuration information used to indicate priorities of all NFC hosts to an NFCC.

The embodiment of the present invention may be applied to a process in which an NFC host in an NFC device having a multi-host architecture controls an NFCC to perform radio frequency communication. Multiple NFC hosts and the NFCC are included in a terminal device. The multiple NFC hosts are connected to the NFCC separately, and each NFC host may control the NFCC to execute a radio frequency communication process.

The DH is one of the NFC hosts, that is, the DH is an NFC host corresponding to the NFCC.

Step 202: The NFCC receives the priority configuration information sent by the DH.

After the NFCC receives the priority configuration information sent by the DH, if a collision occurs when the multiple NFC hosts initiate a radio frequency discovery request, the NFCC may compare priorities of the multiple NFC hosts according to the priority configuration information. Alternatively, the NFCC may send the priority configuration information to all the NFC hosts except the DH after receiving the priority configuration information sent by the DH, so that each NFC host may compare the priorities of the multiple NFC hosts.

It should be noted that step 201 and step 202 are a preset process, but are not mandatory steps that are executed every time when the NFC host initiates a radio frequency discovery request. The DH may send in advance the priority configuration information including priorities of all the NFC hosts to the NFCC.

Optionally, the embodiment of the present invention may also exclude step 201 and step 202. In this case, the priority configuration information may be preset in each NFC host or preset in the NFCC.

Step 203: A first NFC host sends a state acquiring request used to acquire state information of the NFCC to the NFCC.

In another implementation manner, step 203 may be replaced with step 203'. Step 203' is: A first NFC host sends a state notification configuration command to the NFCC, so that the NFCC sends state information of the NFCC to the first NFC host when a state of the NFCC changes. Alternatively, the first NFC host may also acquire the state information of the NFCC in other manners, for example, acquiring the state information of the NFCC from another host or server. The state information of the NFCC is used to indicate the state of the NFCC.

Step 204: The NFCC sends the state information of the NFCC to the first NFC host.

The NFCC may return the state information of the NFCC to the first NFC host after receiving the state acquiring request sent by the first NFC host in step 203. Alternatively, the NFCC may also send, when the state of the NFCC changes, the state information of the NFCC to the first NFC host after receiving the state notification configuration command sent in step 203'. Alternatively, step 203 may also not be required. When the state of the NFCC changes, the NFCC actively reports the state information to the first NFC host.

The state information of the NFCC may be included in a response message that is sent by the NFCC to the first NFC host according to the state acquiring request, where the state information may indicate an idle or non-idle state. When the state information indicates non-idle state, the response message may further include identity information of a third NFC host, where the third NFC host is an NFC host corresponding to a radio frequency communication process currently executed by the NFCC, that is, the radio frequency communication process currently executed by the NFCC is controlled by the third NFC host. Alternatively, when the state information indicates non-idle state, the response message may also not include identity information of a third NFC host; when the third NFC host controls the NFCC to perform radio frequency communication, for example, when the third NFC host sends a radio frequency discovery command to the NFCC, the NFCC may report the identity information of the third NFC host to the first NFC host.

Step 205: The first NFC host receives the state information of the NFCC sent by the NFCC; if the state of the NFCC is idle, step 206 is executed; if the state of the NFCC is non-idle, step 211 to step 215 maybe executed.

Step 206: The first NFC host sends a first radio frequency discovery command to the NFCC.

After the NFCC receives the first radio frequency discovery command, the NFCC may execute a radio frequency discovery process according to the first radio frequency discovery command. The radio frequency discovery process is a process in which the NFC device discovers a remote NFC device according to the radio frequency discovery command.

If the NFCC receives the first radio frequency discovery command and a second radio frequency discovery command that is sent by a second NFC host and collides with the first radio frequency discovery command, and a priority of the first NFC host is higher than a priority of the second NFC host, the first NFC may send the first radio frequency discovery command to the NFCC again, so that the NFCC may execute the radio frequency discovery process according to the first radio frequency discovery command. For details, refer to the following step 207 to step 210.

Step 207: If the NFCC receives the first radio frequency discovery command and a second radio frequency discovery command that is sent by a second NFC host and collides with the first radio frequency discovery command, the NFCC sends a first response message that carries identity information of the second NFC host to the first NFC host.

If the NFCC receives the first radio frequency discovery command and the second radio frequency discovery command that collide with each other, the NFCC may discard the first radio frequency discovery command and the second radio frequency discovery command and execute neither of the commands, and include the identity information of the second NFC host in the response message returned to the first NFC host, so as to inform the first NFC host that a collision occurs currently. Meanwhile, the NFCC also needs to return a response message to the second NFC host, where the response message carries identity information of the first NFC host.

It should be noted that if the NFCC is in the idle state when the first NFC host and the second NFC host acquire the state of the NFCC, the first NFC host and the second NFC host may send the first radio frequency discovery command and the second radio frequency discovery command respectively. In this case, the NFCC may receive the first radio frequency discovery command and the second radio frequency discovery command that collide with each other.

Cases in which the first radio frequency discovery command and the second radio frequency discovery command collide with each other may be various collision cases in the prior art, for example, may include: 1. When the NFCC receives the first radio frequency discovery command and the second radio frequency discovery command simultaneously, the two commands collide with each other; and 2. the NFCC first receives a radio frequency discovery command, but before the NFCC starts a radio frequency discovery process according to the radio frequency discovery command, if the NFCC receives another radio frequency discovery command, the NFCC may be unable to determine which radio frequency discovery command should be executed, and in this case, the two commands collide with each other.

Step 208: The first NFC host compares a priority of the first NFC host with a priority of the second NFC host according to identity information of the first NFC host and the identity information of the second NFC host.

After the first NFC host receives the first response message that is sent by the NFCC and carries the identity information of the second NFC host, the first NFC host may compare the priority of the first NFC host with the priority of the second NFC host according to the preset priority configuration information and according to the identity information of the first NFC host and the identity information of the second NFC host.

Step 209: If the priority of the first NFC host is higher than the priority of the second NFC host, the first NFC sends the first radio frequency discovery command to the NFCC again.

When a collision occurs, the NFCC does not execute the radio frequency discovery process. An NFC host of a higher priority may send the radio frequency discovery command to the NFCC again.

Step 210: The NFCC receives the first radio frequency discovery command that is sent by the first NFC host again, and executes a radio frequency discovery process according to the first radio frequency discovery command.

When the first NFC host determines that the priority of the first NFC host is higher than the priority of the second NFC host, correspondingly, the second NFC host determines that the priority of the second NFC host is lower than that of the first NFC host. In this case, the second NFC host does not repeatedly send the second radio frequency discovery command to the NFCC any longer. Therefore, the NFCC receives only one radio frequency discovery command in step 210, and no collision occurs. It should be noted that the second NFC host may abandon the request, and may also re-initiate a radio frequency discovery request after a preset period of time.

It should be noted that in another implementation manner, the foregoing step 207 to step 210 may be replaced with the following step 207'.

Step 207': If the NFCC receives the first radio frequency discovery command and a second radio frequency discovery command that is sent by a second NFC host and collides with the first radio frequency discovery command, the NFCC compares a priority of the first NFC host with a priority of the second NFC host, and executes a radio frequency discovery process according to a radio frequency discovery command sent by an NFC host of a higher priority.

When the NFCC receives the first radio frequency discovery command and the second radio frequency discovery command that collide with each other, the NFCC may compare the priority of the first NFC host with the priority of the second NFC host according to the preset priority configuration information, and then execute the radio frequency discovery process according to the radio frequency discovery command sent by the NFC host of the higher priority.

Step 211: The first NFC host acquires identity information of a third NFC host, and compares the priority of the first NFC host with a priority of the third NFC host according to the identity information of the first NFC host and the identity information of the third NFC host. If the priority of the first NFC host is higher than the priority of the third NFC host, step 212 is executed; otherwise, the process ends.

When the state of the NFCC is non-idle, the NFCC may also send the identity information of the third NFC host simultaneously when sending the state information to the first NFC host in step 204. For example, in step 204, the NFCC may send a second response message that carries the state information and the identity information of the third NFC host to the first NFC host. Alternatively, when the state of the NFCC is non-idle, the NFCC may also separately send the state information and the identity information of the third NFC host. Alternatively, when the third NFC host controls the NFCC to perform radio frequency communication, for example, when the third NFC host sends a radio frequency discovery command to the NFCC, the NFCC may report the identity information of the third NFC host to the first NFC host. That is, when the third NFC host controls the NFCC to perform radio frequency communication, the state of the NFCC changes from the idle state to the non-idle state. In this case, the NFCC may actively report the state information and the identity information of the third NFC host to the first NFC host.

After receiving the second response message returned by the NFCC, the first NFC host may compare the priority of the first NFC host with the priority of the third NFC host.

Step 212: The first NFC host sends a state resetting command to the NFCC.

When the first NFC host determines that the priority of the first NFC host is higher than that of the third NFC host, the first NFC host may terminate the current radio frequency discovery process of the NFCC by sending the state resetting command, so that the NFCC restores to the idle state.

Step 213: The NFCC terminates the current radio frequency discovery process according to the state resetting command sent by the first NFC host, and restores to the idle state.

After the NFCC restores to the idle state, the NFCC may send an idle state notification message to the first NFC host, where the idle state notification message may carry state information indicating that the NFCC is in the idle state, which is used to indicate that the NFCC is in the idle state currently.

After step 213, the process may end, or may further include the following steps.

Step 214: After the NFCC restores to the idle state, the first NFC host sends the first radio frequency discovery command to the NFCC again.

After the first NFC host receives the idle state notification message, the first NFC host may send the first radio frequency discovery command to the NFCC again.

Step 215: The NFCC executes a radio frequency discovery process according to the first radio frequency discovery command.

Optionally, in another implementation manner, if the state of the NFCC is non-idle in step 205, step 211 to step 215 may also not be executed. Instead, the first NFC host does not send a radio frequency discovery command to the NFCC and abandons the request; after the first NFC host abandons the request, a request may be re-initiated after a preset period of time.

Optionally, in another implementation manner, when the NFCC receives the state acquiring request sent by the first NFC host in step 203 and step 204, if the NFCC is in the non-idle state, that is, if the NFCC is executing a radio frequency communication process controlled by the third NFC host, the foregoing step 211 to step 215 may be replaced with the following step 211' and step 212'.

Step 211': The NFCC compares the priority of the first NFC host with a priority of a third NFC host; if the priority of the first NFC host is higher than the priority of the third NFC host, the NFCC terminates a current radio frequency communication process and sends an idle state notification message to the first NFC host.

Step 212': The NFC host may send the first radio frequency discovery command to the NFCC after receiving the idle state notification message, so that the NFCC may execute a radio frequency discovery process according to the first radio frequency discovery command.

It should be noted that after step 211', the process may end, or may also include step 212'.

Comprehensively, in step 211 to step 215 and in step 211' and step 212', when the NFCC is executing the radio frequency communication process controlled by the third NFC host, if the NFCC receives the state acquiring request sent by the first NFC host, and if the priority of the first NFC host is higher than the priority of the third NFC host, the NFCC terminates the current radio frequency communication process; further, the NFCC may execute the radio frequency discovery process according to the first radio frequency discovery command sent by the first NFC host.

It should be noted that in each embodiment of the present invention, the first NFC host, the second NFC host, the third NFC host, and the NFCC may be included in a same terminal device. In addition, the second NFC host and third NFC host may refer to two different NFC hosts, and may also refer to a same NFC host according to specific implementation conditions.

When the first NFC host is a DH, both the second NFC host and the third NFC host may be a DH or an SE; when the first NFC host is an SE, both the second NFC host and the third NFC host may be a DH or an SE.

Using a mobile terminal as an example, the DH may be a CPU (for example, an application processor or a baseband processor) of the mobile terminal, the SE may be a SIM card or an SD card, and the NFCC may be an NFC chip.

In the embodiment of the present invention, a first NFC host may acquire a state of an NFCC, and when the state of the NFCC is idle, the first NFC host may make, by sending a radio frequency discovery command to the NFCC, the NFCC to initiate a radio frequency discovery process. When the NFCC receives at least two colliding radio frequency discovery commands, the NFCC may feed back collision information to NFC hosts, so that an NFC host of a higher priority may request a radio frequency discovery process by sending a radio frequency discovery command to the NFCC again; or when the NFCC receives at least two colliding radio frequency discovery commands, the NFCC may execute a radio frequency discovery process requested by an NFC host of a higher priority. When the state of the NFCC is non-idle, an NFC host that is going to initiate a radio frequency discovery request may compare a priority of the NFC host and a priority of an NFC host that controls a radio frequency communication process currently; and if the priority of the NFC host that is going to initiate a radio frequency discovery request is higher, the NFC host of the higher priority may terminate the current radio frequency communication process of the NFCC, so that the NFCC that restores to the idle state executes a radio frequency discovery process requested by the NFC host of the higher priority. Alternatively, when the state of the NFCC is non-idle, the NFCC may compare a priority of an NFC host that is going to initiate a radio frequency discovery request and a priority of an NFC host that controls a radio frequency communication process currently; and if the priority of the NFC host that is going to initiate a radio frequency discovery request is higher, the NFCC may terminate the current radio frequency communication process, and execute a radio frequency discovery process requested by the NFC host of the higher priority. A radio frequency communication mechanism in a multi-host architecture, which is provided by the embodiment of the present invention, may avoid a collision problem that occurs in the multi-host architecture when an NFC host controls the NFCC to perform radio frequency communication.

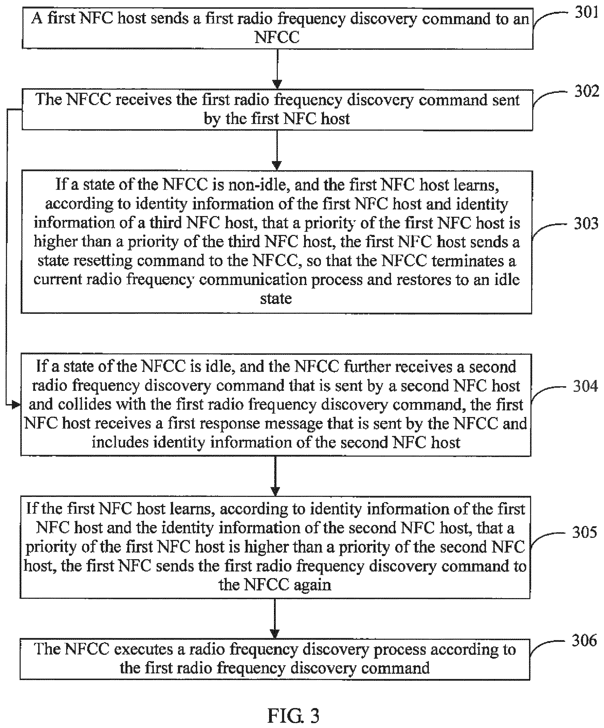

FIG 3 is a flowchart of another method for controlling NFC radio frequency discovery according to an embodiment of the present invention. As shown in FIG 3, the method includes:
Step 301: A first NFC host sends a first radio frequency discovery command to an NFCC.

In the embodiment of the present invention, the NFC host first may not consider a current state of the NFCC when initiating a radio frequency discovery request, but directly sends the radio frequency discovery command to the NFCC.

Step 302: The NFCC receives the first radio frequency discovery command sent by the first NFC host.

The NFCC determines the state of the NFCC after receiving the first radio frequency discovery command sent by the first NFC host.

If the state of the NFCC is non-idle, the NFCC may return a response message that includes state information of the NFCC to the first NFC host; the first NFC host may, for example, abandon the request according to the response message, and after abandoning the request, may re-initiate a request after a preset period of time.

Alternatively, if the state of the NFCC is non-idle, step 303 is executed.

Step 303: If a state of the NFCC is non-idle, and the first NFC host learns, according to identity information of the first NFC host and identity information of a third NFC host, that a priority of the first NFC host is higher than a priority of the third NFC host, the first NFC host sends a state resetting command to the NFCC, so that the NFCC terminates a current radio frequency communication process and restores to an idle state.

The third NFC host is an NFC host corresponding to the radio frequency communication process currently executed by the NFCC, and the identity information of the third NFC host is sent by the NFCC to the first NFC host in the radio frequency communication process performed by the third NFC host using the NFCC.

When the state of the NFCC is non-idle, the NFCC may send a response message to the first NFC host, and then the first NFC host may compare the priority of the first NFC host with the priority of the third NFC host.

If the state of the NFCC is idle, the NFCC further receives a second radio frequency discovery command that is sent by a second NFC host and collides with the first radio frequency discovery command, and the priority of the first NFC host is higher than a priority of the second NFC host, the first NFC may send the first radio frequency discovery command to the NFCC again, so that the NFCC executes a radio frequency discovery process according to the first radio frequency discovery command. For details, refer to the following step 304 to step 306.

Step 304: If a state of the NFCC is idle, and the NFCC further receives a second radio frequency discovery command that is sent by a second NFC host and collides with the first radio frequency discovery command, the first NFC host receives a first response message that is sent by the NFCC and includes identity information of the second NFC host.

When the state of the NFCC is idle, the NFCC may receive radio discovery commands that are sent by multiple NFC hosts and that collide with each other. After the NFCC receives the radio discovery commands that are sent by the multiple NFC hosts and that collide with each other, the NFCC may return a response message to each NFC host, where the response message carries identity information of another or more NFC hosts involving in the collision. For example, a response message returned by the NFCC to the first NFC host includes identity information of the second NFC host, and a response message returned by the NFCC to the second NFC host includes identity information of the first NFC host.

Step 305: If the first NFC host learns, according to the identity information of the first NFC host and the identity information of the second NFC host, that a priority of the first NFC host is higher than a priority of the second NFC host, the first NFC sends the first radio frequency discovery command to the NFCC again.

When multiple NFC hosts collide, an NFC host of a highest priority may send a radio frequency discovery command to the NFCC again, and other NFC hosts do not send radio frequency discovery commands to the NFCC any longer, so that the NFCC may execute a radio frequency discovery process according to the radio frequency discovery command sent by the NFC host of the highest priority.

Step 306: The NFCC executes a radio frequency discovery process according to the first radio frequency discovery command sent by the first NFC host in step 304.

Optionally, in another implementation manner, the foregoing step 304 to step 306 maybe replaced with step 304'.

Step 304': If the state of the NFCC is idle, the NFCC further receives a second radio frequency discovery command that is sent by a second NFC host and collides with the first radio frequency discovery command, and the priority of the first NFC host is higher than a priority of the second NFC host, the NFCC executes a radio frequency discovery process according to the first radio frequency discovery command.

It should be noted that step 304' may include content of the foregoing step 304 to step 306, or step 304' may include another case: After the NFCC receives the first radio frequency discovery command and the second radio frequency discovery command, the NFCC compares the priority of the first NFC host with the priority of the second NFC host, and then the NFCC executes a radio frequency discovery process according to a radio frequency discovery command sent by an NFC host of a higher priority.

In the embodiment of the present invention, after an NFCC in a non-idle state receives a radio frequency discovery command of another NFC host, if a priority of the another NFC host is higher, the NFCC may terminate a current radio frequency communication process; or after receiving radio frequency discovery commands sent by multiple NFC hosts, an NFCC in an idle state may execute a radio frequency discovery process according to a radio frequency discovery command sent by an NFC host of a highest priority. Therefore, a collision problem that occurs in a multi-host architecture when an NFC host controls the NFCC to perform radio frequency communication may be avoided.

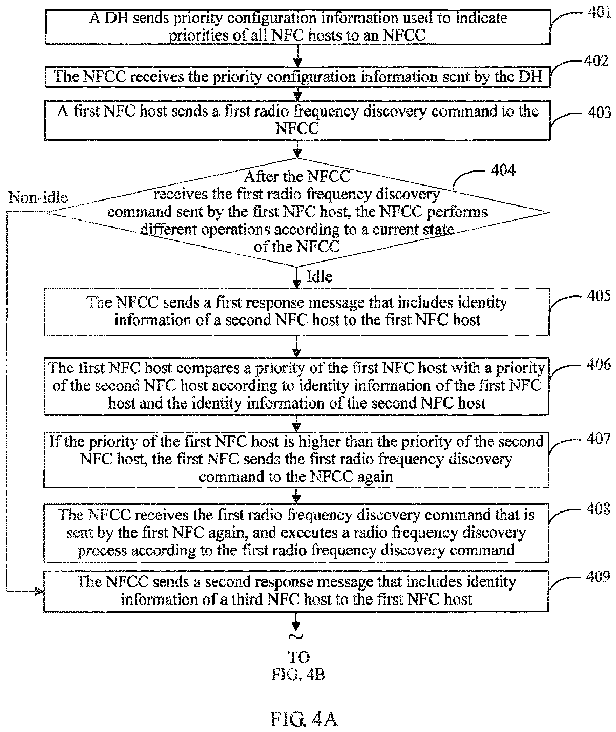

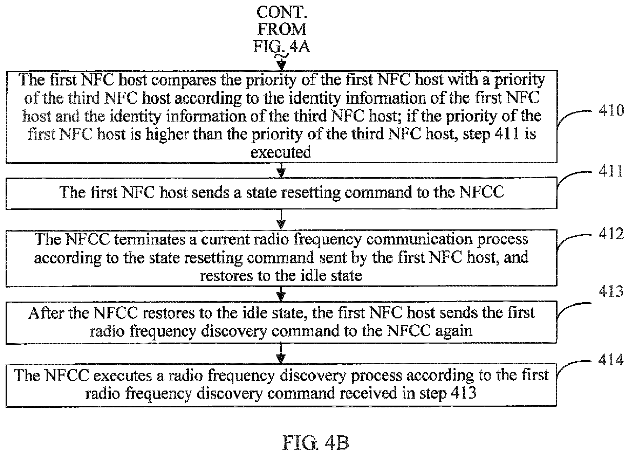

FIG. 4A and FIG. 4B are a flowchart of another method for controlling NFC radio frequency discovery according to an embodiment of the present invention. On the basis of the embodiment shown in FIG. 3, as shown in FIG. 4A and FIG. 4B, the method includes:
Step 401: A DH sends priority configuration information used to indicate priorities of all NFC hosts to an NFCC.

The embodiment of the present invention may be applied to a process in which an NFC host in an NFC device having a multi-host architecture controls the NFCC to perform radio frequency communication. The DH is one of the NFC hosts, that is, the DH is an NFC host corresponding to the NFCC.

Step 402: The NFCC receives the priority configuration information sent by the DH.

Step 401 and step 402 are the same as step 201 and step 202 in the embodiment shown in FIG. 2. For details, refer to the description in the embodiment shown in FIG. 2.

Step 403: A first NFC host sends a first radio frequency discovery command to the NFCC.

When the first NFC host needs to control the NFCC to perform an NFC radio frequency discovery process, the first NFC host may directly send the first radio frequency discovery command to the NFCC not according to a current state of the NFCC.

Step 404: After the NFCC receives the first radio frequency discovery command sent by the first NFC host, the NFCC performs different operations according to a current state of the NFCC. If the state of the NFCC is idle, and the NFCC does not receive a radio frequency discovery command sent by another NFC host, the NFCC executes a radio frequency discovery process according to the first radio frequency discovery command; if the state of the NFCC is idle, and the NFCC further receives a second radio frequency discovery command that is sent by a second NFC host and collides with the first radio frequency discovery command, step 405 is executed; if the state of the NFCC is non-idle, step 409 to step 414 may be executed.

Step 405: The NFCC sends a first response message that includes identity information of a second NFC host to the first NFC host.

After the NFCC receives the first radio frequency discovery command, if the NFCC further receives a radio frequency discovery command that is sent by the second NFC host and collides with the first radio frequency discovery command, the NFCC includes the identity information of the second NFC host in the response message returned to the first NFC host, so as to inform the first NFC host that a collision occurs currently. Meanwhile, the NFCC also needs to return a response message to the second NFC host, where the response message carries identity information of the first NFC host.

Step 406: The first NFC host compares a priority of the first NFC host with a priority of the second NFC host according to identity information of the first NFC host and the identity information of the second NFC host.

Step 407: If the priority of the first NFC host is higher than the priority of the second NFC host, the first NFC sends the first radio frequency discovery command to the NFCC again.

Step 408: The NFCC receives the first radio frequency discovery command that is sent by the first NFC again, and executes a radio frequency discovery process according to the first radio frequency discovery command.

It should be noted that in another implementation manner, the foregoing step 405 to step 408 may be replaced with the following step 405'.

Step 405': If the state of the NFCC is idle, and the NFCC further receives a second radio frequency discovery command that is sent by a second NFC host and collides with the first radio frequency discovery command, the NFCC compares a priority of the first NFC host with a priority of the second NFC host; if the priority of the first NFC host is higher than the priority of the second NFC host, the NFCC executes a radio frequency discovery process according to the first radio frequency discovery command.

When the NFCC receives the first radio frequency discovery command and the second radio frequency discovery command that collide with each other, the NFCC may compare the priority of the first NFC host with the priority of the second NFC host according to the preset priority configuration information, and then execute a radio frequency discovery process according to the radio frequency discovery command sent by the NFC host of the higher priority.

Step 409: The NFCC sends a second response message that includes identity information of a third NFC host to the first NFC host.

The third NFC host is an NFC host corresponding to a radio frequency communication process currently executed by the NFCC, that is, currently the third NFC host is controlling the NFCC to perform the radio frequency communication process. The second response message may further include state information used to indicate that the non-idle state.

Alternatively, the second response message may also not include the identity information of the third NFC host. When the third NFC host controls the NFCC to perform radio frequency communication, for example, when the third NFC host sends a radio frequency discovery command to the NFCC, the NFCC may report the identity information of the third NFC host to the first NFC host.

Step 410: The first NFC host compares the priority of the first NFC host with a priority of the third NFC host according to the identity information of the first NFC host and the identity information of the third NFC host; if the priority of the first NFC host is higher than the priority of the third NFC host, step 411 is executed.

Step 411: The first NFC host sends a state resetting command to the NFCC.

When the first NFC host determines that the priority of the first NFC host is higher than that of the third NFC host, the first NFC host may terminate the current radio frequency communication process of the NFCC by sending the state resetting command, so that the NFCC restores to the idle state.

Step 412: The NFCC terminates a current radio frequency communication process according to the state resetting command sent by the first NFC host, and restores to the idle state.

When the NFCC restores to the idle state, the NFCC may send an idle state notification message to the first NFC host, where the idle state notification message may carry state information indicating the idle state.

After step 412, the process may end, or may further include the following steps.

Step 413: After the NFCC restores to the idle state, the first NFC host sends the first radio frequency discovery command to the NFCC again.

After the first NFC host receives the idle state notification message, the first NFC host may send the first radio frequency discovery command to the NFCC again.

Step 414: The NFCC executes a radio frequency discovery process according to the first radio frequency discovery command received in step 413.

Optionally, in another implementation manner, if the state of the NFCC is non-idle in step 404, step 409 to step 414 may also not be executed. Instead, the first NFC host abandons the request; after the first NFC host abandons the request and after a preset period of time, the first NFC host may send a radio frequency discovery command to the NFCC again, requesting the NFCC to initiate a radio frequency discovery process.

Optionally, in another implementation manner, if the state of the NFCC is non-idle in step 404, the foregoing step 409 to step 414 may also be replaced with the following step 409' and step 410'.

Step 409': The NFCC compares the priority of the first NFC host with a priority of a third NFC host; if the priority of the first NFC host is higher than the priority of the third NFC host, the NFCC terminates a current radio frequency communication process.

Step 410': The NFCC executes a radio frequency discovery process according to the first radio frequency discovery command received in step 404.

It should be noted that after step 409', the process may end, or may also include step 410'.

Comprehensively, in step 409 to step 414 and in step 409' and step 410', when the NFCC is executing the radio frequency communication process controlled by the third NFC host, if the NFCC receives again the first radio frequency discovery command sent by the first NFC host, and if the priority of the first NFC host is higher than the priority of the third NFC host, the NFCC terminates the current radio frequency communication process; further, the NFCC may execute the radio frequency discovery process according to the first radio frequency discovery command sent by the first NFC host.

In the embodiment of the present invention, when an NFCC in an idle state receives at least two colliding radio frequency discovery commands, the NFCC may feed back collision information to NFC hosts, so that an NFC host of a higher priority may request a radio frequency discovery process again; or when an NFCC receives at least two colliding radio frequency discovery commands, the NFCC may compare priorities of multiple NFC hosts, and execute a radio frequency discovery process requested by an NFC host of a highest priority. If the state of the NFCC is non-idle when a first NFC host sends a radio frequency discovery command to the NFCC, the first NFC host may compare a priority of the first NFC host and a priority of a third NFC host corresponding to a radio frequency communication process currently executed by the NFCC; and if the priority of the first NFC host is higher, the first NFC host of the higher priority may terminate the current radio frequency communication process of the NFCC, so that the NFCC that restores to an idle state executes a radio frequency discovery process requested by the first NFC host of the higher priority. Alternatively, if the NFCC receives again a radio frequency discovery command sent by the first NFC host when the state of the NFCC is non-idle, the NFCC may compare a priority of the first NFC host and a priority of a third NFC host corresponding to a radio frequency communication process currently executed by the NFCC; and if the priority of the first NFC host is higher, the NFCC may terminate the current radio frequency communication process, and execute a radio frequency discovery process requested by the first NFC host of the higher priority. A radio frequency communication mechanism in a multi-host architecture, which is provided by the embodiment of the present invention, may avoid a collision problem that occurs in the multi-host architecture when an NFC host controls the NFCC to perform radio frequency communication.

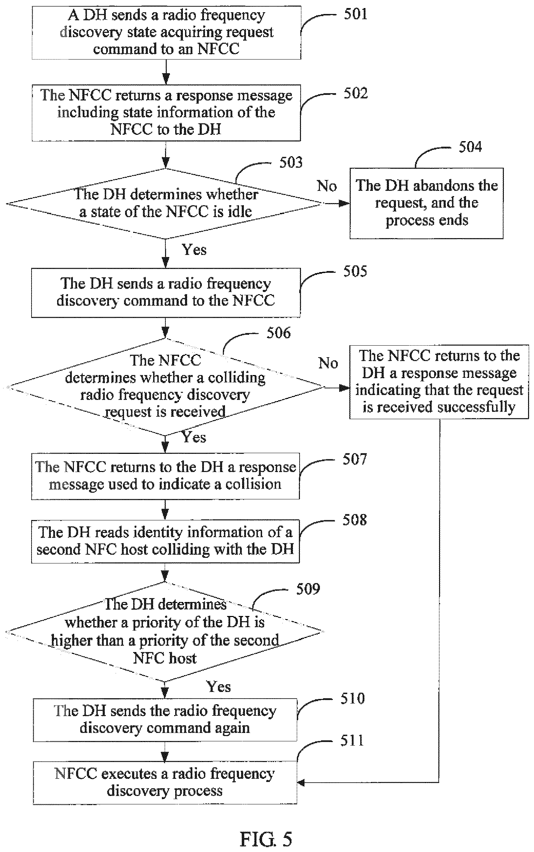

The following describes the embodiments shown in FIG. 1 to FIG. 4A and FIG. 4B in detail by using embodiments shown in FIG. 5 to FIG. 8.

FIG. 5 is a flowchart of another method for controlling NFC radio frequency discovery according to an embodiment of the present invention. On the basis of the embodiments shown in FIG. 1 and FIG. 2, as shown in FIG. 5, the method includes:
Step 501: A DH sends a radio frequency discovery state acquiring request command (RF_DISCOVERY_GET_STATE_CMD) to an NFCC, so as to acquire current state information of the NFCC. The radio frequency discovery state acquiring request command is equivalent to the state acquiring request in the embodiment shown in FIG. 1 or FIG. 2.

In the embodiment of the present invention, an example in which the DH is a first NFC host and an SE is a second NFC host or a third NFC host, is used for description.

When the DH needs to request the NFCC to initiate a radio frequency discovery process, step 501 may be executed.

Step 502: The NFCC returns a response message (RF_DISCOVERY_GET_STATE_RSP) including state information of the NFCC to the DH.

The response message may include current running state information of the NFCC and identity information of an NFC host. The running state information may indicate a current running state of the NFCC, for example, including the foregoing 7 states. The 6 states except the idle state may be collectively called a non-idle state. The identity information of the NFC host may include, for example, a host type (Host Type) and a host identifier (Host ID). If the state of the NFCC is the non-idle state, the host type may indicate a type of a host that is using the NFCC, and the host identifier indicates the host that is using the NFCC; if the state of the NFCC is the idle state (RFST_IDLE), the identity information of the NFC host in the response message may be meaningless information.

Step 503: The DH reads the state information, and determines whether a current state of the NFCC is idle (RFST_IDLE). If yes, step 505 is executed; otherwise, step 504 is executed.

Step 504: The DH abandons the request, and the process ends; after the process ends, the DH may also execute step 501 again after a preset period of time.

Step 505: The DH sends a radio frequency discovery command (RF_DISCOVERY_CMD) to the NFCC, requesting the NFCC to initiate a radio frequency discovery process, where the radio frequency discovery process is used to discover a remote NFC device. The radio frequency discovery command may carry configuration parameter information for radio frequency discovery.

The DH sends a radio frequency discovery request to the NFCC by sending the radio frequency discovery command to the NFCC.

Step 506: After receiving the radio frequency discovery request from the DH, the NFCC determines whether a colliding radio frequency discovery request sent by another host is also received. If yes, step 507 is executed; otherwise, the NFCC returns to the DH a response message (RF_DISCOVERY_RSP) used to indicate that the NFCC successfully receives the request of the DH, where a status code (Status) in the response message may be set, for example, to 0x00, which is used to indicate that the NFCC successfully receives the request of the DH, and then step 511 is executed.

Step 507: The NFCC returns to the DH a response message (RF_DISCOVERY_RSP) used to indicate a collision. The status code (Status) in the response message may be set, for example, to 0xA3, which is used to indicate that a radio frequency discovery collision occurs in the NFCC (that is, the NFCC receives two or more colliding radio frequency discovery requests simultaneously); the response message includes identity information of a colliding NFC host (called a second NFC host), where the identity information may include, for example, a host type (Host Type) and a host identifier (Host ID) of the second NFC host.

Step 508: The DH reads the identity information of the host colliding with the DH from the response message (RF_DISCOVERY_RSP), that is, the DH reads the identity information of the second NFC host.

Step 509: The DH determines, according to the identity information, whether a priority of the DH is higher than a priority of the second NFC host. If yes, step 510 is executed; otherwise, the process ends.

The NFC host may determine priorities according to the host type or host identifier, or according to both the host type and the host identifier. For example, if the priority of the DH is higher than that of the SE by default, the DH may determine that the priority of the DH is higher when the DH learns that the second NFC host is an SE; however, if the DH learns that the second NFC host is a DH, the DH needs to further read the identifier of the second NFC host to determine priorities; if the priority of the DH being higher than that of the SE is not a default setting, the DH may determine priorities according to an identifier of the DH and the identifier of the second NFC host.

Step 510: The DH sends the radio frequency discovery command (RF_DISCOVERY_CMD) again, requesting the NFCC to initiate the radio frequency discovery process, which is used to discover a remote NFC device.

Step 511: The NFCC executes the radio frequency discovery process according to the radio frequency discovery command that is sent by the DH again, and discovers the remote NFC device.

Further, in another implementation manner, before step 501, a process of pre-configuring priorities may be included, which may specifically include the following steps (not shown in the figure):
Step 500a: The DH sends a priority configuration command (RF_DISCOVERY_PRI_CMD) to the NFCC, and configures a priority list for the NFCC, so as to indicate priorities of NFC hosts when a radio frequency communication collision occurs.

The priority configuration command may include priority information of all NFC hosts.

Step 500b: The NFCC returns a response message (RF_DISCOVERY_PRI_RSP) to the DH, so as to confirm that the priority configuration command is received.

Step 500c: The NFCC broadcasts the priority list to all the NFC hosts except the DH that are connected to the NFCC, so that when a collision with the other NFC hosts occurs, priorities of the NFC hosts may be compared according to the priority list.

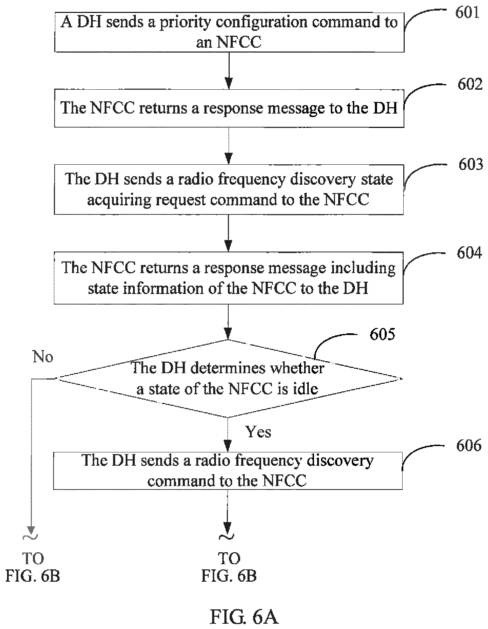

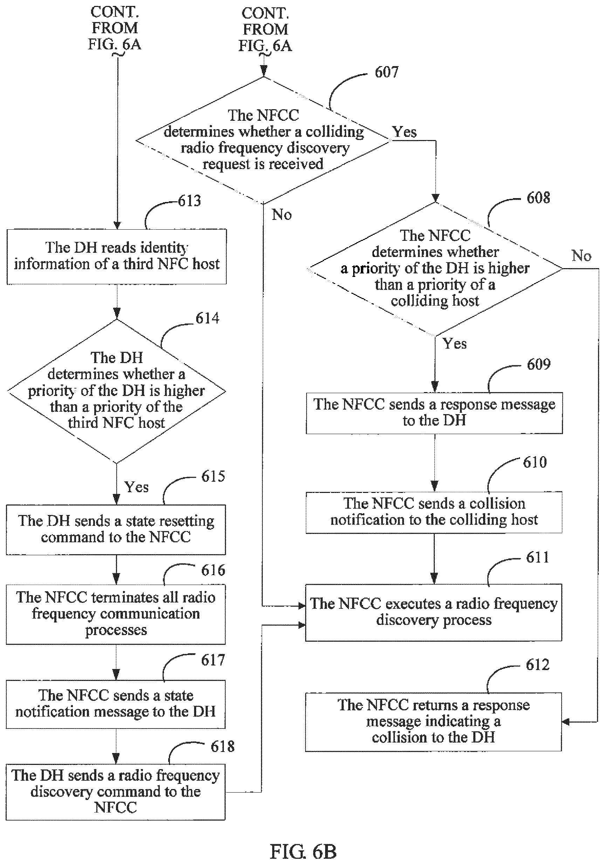

FIG. 6A and FIG. 6B are a flowchart of another method for controlling NFC radio frequency discovery according to an embodiment of the present invention. On the basis of the embodiments shown in FIG. 1 and FIG. 2, as shown in FIG. 6A and FIG. 6B, the method includes:
Step 601: A DH sends a priority configuration command (RF_DISCOVERY_PRI_CMD) to an NFCC, and configures a priority list for the NFCC, so as to indicate priorities of NFC hosts when a radio frequency communication collision occurs.
Step 602: The NFCC returns a response message (RF_DISCOVERY_PRI_RSP) to the DH, so as to confirm that the priority configuration command is received.

In this embodiment, after receiving the priority list, the NFCC may not forward the priority list to other NFC hosts; when a collision occurs subsequently, the NFCC may determine which NFC host has a higher priority.

Step 603: The DH sends a radio frequency discovery state acquiring request command (RF_DISCOVERY_GET_STATE_CMD) to the NFCC, so as to acquire a current running state of the NFCC.

Step 604: The NFCC returns a response message (RF_DISCOVERY_GET_STATE_RSP) including state information of the NFCC to the DH.

Step 603 and step 604 are the same as step 501 and step 502 in the embodiment shown in FIG. 5 respectively.

Step 605: The DH reads the state information, and determines whether the current state of the NFCC is an idle state (RFST_IDLE). If yes, step 606 is executed; otherwise, step 613 is executed.

Step 606: The DH sends a radio frequency discovery command (RF_DISCOVERY_CMD) to the NFCC, requesting the NFCC to initiate a radio frequency discovery process, where the radio frequency discovery process is used to discover a remote NFC device.

Step 607: After receiving the radio frequency discovery command from the DH, the NFCC determines whether a colliding radio frequency discovery command sent by another host (for example, a second NFC host) is also received. If yes, step 608 is executed; otherwise, step 611 is executed.

Step 608: The NFCC determines whether a priority of the DH is higher than a priority of the host that has a radio frequency discovery collision. If yes, step 609 is executed; otherwise, step 612 is executed.

Step 609: The NFCC sends a response message (RF_DISCOVERY_RSP) to the DH, where a status code (Status) in the response message may be set, for example, to 0x00, indicating that the NFCC successfully receives the request of the DH, and then step 610 is executed.

Step 610: The NFCC sends a response message carrying a collision notification to the host that has the radio frequency discovery collision with the DH.

This embodiment does not limit a sequence in which step 609 and step 610 are executed.

Step 611: The NFCC executes the radio frequency discovery process according to the radio frequency discovery command sent by the DH, and discovers a remote NFC device; the process ends.

Step 612: The NFCC returns a response message (RF_DISCOVERY_RSP) to the DH, where a status code (Status) may be set, for example, to 0xA3, indicating that a radio frequency discovery collision occurs in the NFCC; the process ends.

Step 613: The DH reads identity information, which is carried in the response message returned by the NFCC, of a third NFC host that is controlling the NFCC to perform radio frequency communication.

When the third NFC host is controlling the NFCC to perform radio frequency communication, the current state of the NFCC is non-idle. In this case, the response message returned by the NFCC in step 604 may carry the identity information of the third NFC host.

It should be noted that in another implementation manner, the DH may acquire the identity information of the third NFC host in other manners. For example, in the process in which the third NFC host controls the NFCC to perform radio frequency communication, for example, when the third NFC host sends a radio frequency discovery command to the NFCC, the NFCC may report the identity information of the third NFC host to the DH. That is, the DH may read the identity information of the third NFC host without executing step 613.

Step 614: The DH determines whether a priority of the DH is higher than a priority of the third NFC host. If yes, step 615 is executed; otherwise, the process ends.

Step 615: The DH sends a state resetting command (RF_DISCOVERY_IDLE_CMD) to the NFCC, so as to reset the state of the NFCC, so that the NFCC terminates a current radio frequency communication process and restores to the idle state.

Step 616: The NFCC terminates all radio frequency communication processes, and sets the state of the NFCC to idle (RFST_IDLE).

Step 617: The NFCC sends a state notification message (RF_DISCOVERY_IDLE_NTF) to the DH, notifying the DH that the state of the NFCC is set to idle.

Step 618: The DH sends a radio frequency discovery command to the NFCC, requesting the NFCC to initiate a radio frequency discovery process, which is used to discover a remote NFC device, and then step 611 is executed.

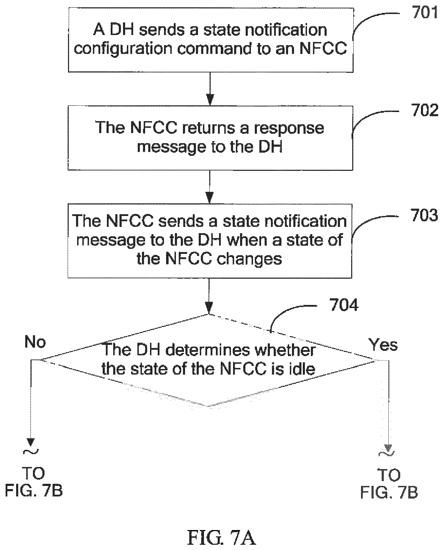

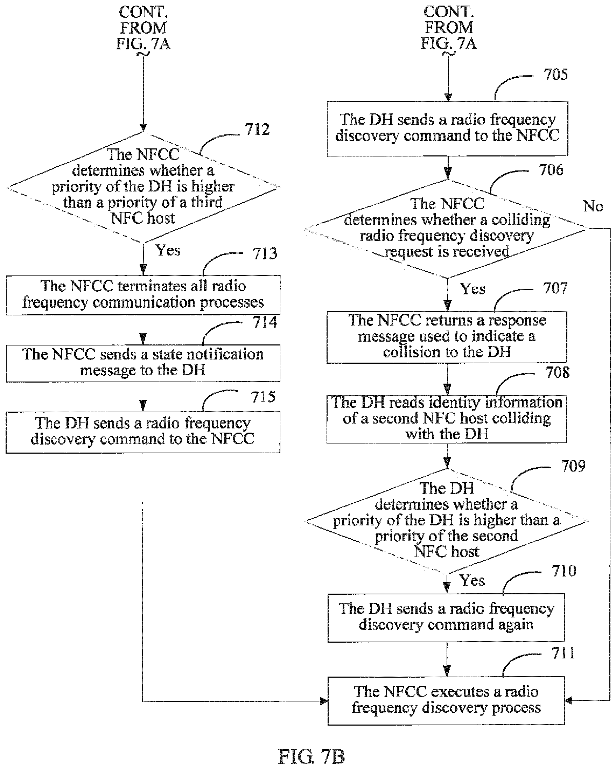

FIG. 7A and FIG. 7B are a flowchart of another method for controlling NFC radio frequency discovery according to an embodiment of the present invention. On the basis of the embodiments shown in FIG. 1 and FIG. 2, as shown in FIG. 7A and FIG. 7B, the method includes:
Step 701: A DH sends a state notification configuration command (RF_DISCOVERY_STATE_NOTIFICATION_CMD) to an NFCC, so as to set a function of notifying the DH of a state of the NFCC when the state of the NFCC changes.
Step 702: The NFCC returns a response message to the DH, so as to confirm that the state notification configuration command is received.
Step 703: The NFCC sends a state notification message to the DH when the state of the NFCC changes, where the state notification message carries current state information of the NFCC.

It should be noted that in another implementation manner, step 701 and step 702 may not be included. Instead, the NFCC actively sends a state notification message to the DH when the state of the NFCC changes.

Step 704: The DH reads the state information, and determines whether the current state of the NFCC is idle. If yes, step 705 to step 711 are executed; otherwise, step 712 is executed.

Step 705 to step 711 are corresponding to step 505 to step 511 in the embodiment shown in FIG. 5 on a one-to-one basis. For details, refer to the description in the embodiment shown in FIG. 5, where step 711 is that the NFCC executes a radio frequency discovery process according to a radio frequency discovery command that is sent by the DH again, and discovers a remote NFC device.

Step 712: The NFCC determines whether a priority of the DH is higher than a priority of a third NFC host. If yes, step 713 is executed; otherwise, the process ends. The third NFC host is an NFC host that is controlling the NFCC to perform radio frequency communication.

Step 713: The NFCC terminates all radio frequency communication processes, and sets the state of the NFCC to idle (REST_IDLE).

Step 714: The NFCC sends a state notification message to the DH, notifying the DH that the state of the NFCC is set to idle.

Step 715: The DH sends a radio frequency discovery command to the NFCC, requesting the NFCC to initiate a radio frequency discovery process, which is used to discover a remote NFC device, and then step 711 is executed.

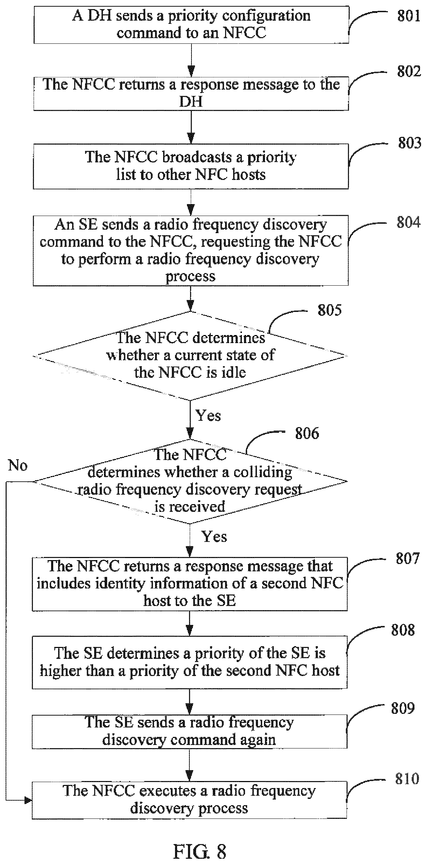

FIG. 8 is a flowchart of another method for controlling NFC radio frequency discovery according to an embodiment of the present invention. On the basis of the embodiments shown in FIG. 3 and FIG. 4A and FIG. 4B, as shown in FIG. 8, the method includes:
Step 801 to step 803 are the same as step 500a to step 500c in the embodiment shown in FIG. 5 respectively.
Step 804: An SE sends a radio frequency discovery command to the NFCC, requesting the NFCC to perform a radio frequency discovery process.

In the embodiment of the present invention, an example in which the SE is a first NFC host, is used for description, and a second NFC host or a third NFC host may be another SE or a DH.

Step 805: The NFCC determines whether a current state of the NFCC is idle (RFST_IDLE). If yes, step 806 is executed; otherwise, the SE abandons the request, the process ends, and after the abandoning, the SE may further execute step 804 again after a preset period of time.

Step 806: The NFCC determines whether a colliding radio frequency discovery request sent by another host is also received. If yes, step 807 is executed; otherwise, step 810 is executed.

Step 807: The NFCC returns to the SE a response message used to indicate a collision, where the response message includes identity information of a colliding NFC host (second NFC host).

Step 808: The SE reads the identity information of the second NFC host, and determines, according to a priority list, whether a priority of the SE is higher than a priority of the second NFC host. If yes, step 809 is executed; otherwise, the process ends.

Step 809: The SE sends a radio frequency discovery command again, requesting the NFCC to initiate a radio frequency discovery process, which is used to discover a remote NFC device.

Step 810: The NFCC executes the radio frequency discovery process according to the radio frequency discovery command sent by the SE, and discovers a remote NFC device; the process ends.

It should be noted that in another implementation manner, if the NFCC determines that the current state of the NFCC is non-idle in step 805, the SE or the NFCC may determine priorities of the SE and the colliding NFC host, and the NFCC executes a radio frequency communication process requested by an NFC host of a higher priority; in another implementation manner, if the NFCC determines a collision in step 806, the NFCC may determine the priorities of the colliding NFC hosts, and execute a radio frequency communication process requested by an NFC host of a higher priority. For details, refer to the related description in the embodiment shown in FIG. 6A and FIG. 6B, or FIG 7A and FIG 7B, and the details are not described herein again.

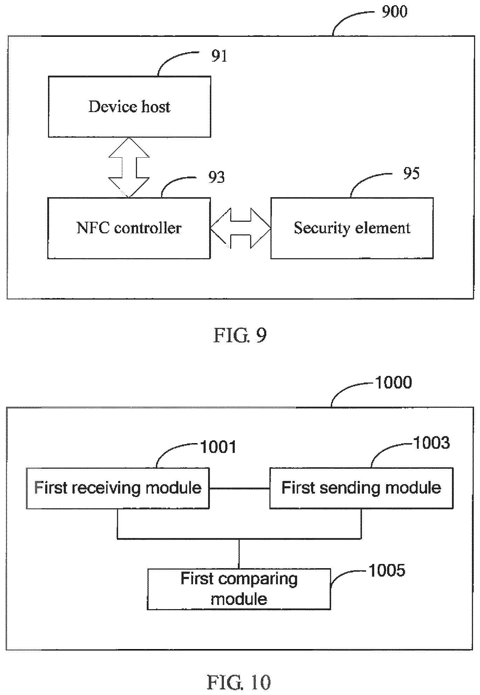

FIG. 9 is a schematic structural diagram of a terminal device according to an embodiment of the present invention. As shown in FIG. 9, a terminal device 900 includes a device host (DH) 91, an NFC controller (NFCC) 93, and at least one secure element (SE) 95; the device host 91 and secure element 95 are separately connected to the NFC controller 93.

The terminal device in the embodiment of the present invention is a terminal device having an NFC function, for example, may be a printer, a television, a sound box, a mobile phone, and a camera.

The device host 91 is a device host of the terminal device, and is responsible for management of the whole terminal device, including management of the NFC controller. If the terminal device is a mobile phone, the device host may be a CPU of the mobile phone. Generally, one device host 91 exists in the terminal device, but a case of multiple device hosts 91 is not excluded.

The NFC controller 93 is responsible for physical transmission of data by using a radio frequency interface and an antenna. In the terminal device, the NFC controller may be, for example, an NFC chip.

The secure element 95 may provide a secure execution environment for an NFC application. The secure element 95 may be, for example, in multiple physical forms such as a UICC (universal integrated circuit card, universal integrated circuit card) or an SD card. If the terminal device is a mobile phone, the secure element 95 may be a SIM card or an SD card. There may be multiple secure elements 95.

Both the device host 91 and the secure element 95 are NFC hosts, and may control the NFC controller to perform a radio frequency communication process. The device host 91 or secure element 95 may be the first NFC host in the foregoing method embodiment, and another one or more NFC hosts are the foregoing second NFC host or third NFC host.

The device host 91 is configured to acquire state information used to indicate a state of the NFCC.

The device host 91 is further configured to: if the acquired state of the NFCC is non-idle, skip sending a first radio frequency discovery command to the NFCC; or is further configured to: if the acquired state of the NFCC is non-idle, and the device host 91 learns, according to identity information of the device host 91 and identity information of the secure element 95, that a priority of the device host 91 is higher than a priority of the secure element 95, send a state resetting command to the NFCC, so that the NFCC terminates a current radio frequency communication process and restores to an idle state, where the secure element 95 is an NFC host corresponding to the radio frequency communication process currently executed by the NFCC, and the identity information of the secure element 95 is sent by the NFCC to the device host 91 in the radio frequency communication process performed by the secure element 95 using the NFCC.

Further, the device host 91 is further configured to: after sending the state resetting command to the NFCC, so that the NFCC terminates the current radio frequency communication process, receive an idle state notification message sent by the NFCC, and send the first radio frequency discovery command to the NFCC, where the idle state notification message is sent by the NFCC to the device host 91 after the NFCC restores to the idle state.

Further, the device host 91 is further configured to:
if the state of the NFCC is idle, after sending the first radio frequency discovery command to the NFCC, receive a first response message that is sent by the NFCC and includes identity information of the secure element 95, where the first response message is sent by the NFCC to the device host 91 when the NFCC receives the first radio frequency discovery command and a second radio frequency discovery command that collides with the first radio frequency discovery command, where the second radio frequency discovery command is sent by the secure element 95 to the NFCC.

If the device host 91 learns, according to the identity information of the device host 91 and the identity information of the secure element 95, that the priority of the device host 91 is higher than the priority of the secure element 95, the device host 91 sends the first radio frequency discovery command to the NFCC again, so that the NFCC executes the radio frequency discovery process according to the first radio frequency discovery command.

Further, the device host 91 is further configured to: before acquiring the state information used to indicate the state of the NFCC, send to the NFCC a state acquiring request used to acquire the state information; or before acquiring the state information used to indicate the state of the NFCC, send a state notification configuration command to the NFCC, so that the NFCC sends the state information of the NFCC to the device host 91 when the state of the NFCC changes.

Further, the NFCC 93 may be further configured to terminate the current radio frequency communication process if the state of the NFCC is non-idle, the NFCC receives the first radio frequency discovery command or the state acquiring request sent by the device host 91, and the priority of the device host 91 is higher than the priority of the secure element 95. In this case, the secure element 95 is the NFC host corresponding to the radio frequency communication process currently executed by the NFCC.

Further, the NFCC 93 may be further configured to: after terminating the current radio frequency communication process, execute the radio frequency discovery process according to the first radio frequency discovery command sent by the device host 91.

Further, the NFCC 93 may be further configured to execute the radio frequency discovery process according to the first radio frequency discovery command if the state of the NFCC is idle, the NFCC receives the first radio frequency discovery command sent by the device host 91 and a second radio frequency discovery command that is sent by the secure element 95 and collides with the first radio frequency discovery command, and the priority of the device host 91 is higher than the priority of the secure element 95.

Specifically, the NFCC 93 may be specifically configured to:
if the state of the NFCC is idle, and the NFCC receives the first radio frequency discovery command sent by the device host 91 and the second radio frequency discovery command that is sent by the secure element 95 and collides with the first radio frequency discovery command, send a first response message including identity information of the secure element 95 to the device host 91, so that the device host 91 compares the priority of the device host 91 with the priority of the secure element 95 according to identity information of the device host 91 and the identity information of the secure element 95.

If the priority of the device host 91 is higher than the priority of the secure element 95, the NFCC receives the first radio frequency discovery command sent by the device host 91 again, and executes the radio frequency discovery process according to the first radio frequency discovery command.

Alternatively, the NFCC 93 may be specifically configured to:
if the state of the NFCC is idle, and the NFCC receives the first radio frequency discovery command sent by the device host 91 and the second radio frequency discovery command that is sent by the secure element 95 and collides with the first radio frequency discovery command, compare the priority of the device host 91 with the priority of the secure element 95, and execute the radio frequency discovery process according to a radio frequency discovery command sent by an NFC host of a higher priority.

It should be noted that the secure element 95 may also have a function of the device host 91 simultaneously; when the secure element 95 is used as a first NFC host, the second NFC host may be the device host 91 or may also be another secure element 95.

FIG. 10 is a schematic structural diagram of an NFC host according to an embodiment of the present invention. As shown in FIG. 10, an NFC host 1000 includes a first receiving module 1001 and a first sending module 1003.

The first receiving module 1001 is configured to acquire state information used to indicate a state of a near field communication controller NFCC.

The first sending module 1003 is configured to: after the first receiving module 1001 acquires the state information used to indicate the state of the NFCC, skip sending a first radio frequency discovery command to the NFCC if the state of the NFCC is non-idle; or is configured to: after the first receiving module 1001 acquires the state information used to indicate the state of the NFCC, if the state of the NFCC is non-idle, and a first NFC host learns, according to identity information of the first NFC host and identity information of a third NFC host, that a priority of the first NFC host is higher than a priority of the third NFC host, send a state resetting command to the NFCC, so that the NFCC terminates a current radio frequency communication process and restores to an idle state, where the third NFC host is an NFC host corresponding to the radio frequency communication process currently executed by the NFCC, and the identity information of the third NFC host is sent by the NFCC to the first NFC host in the radio frequency communication process performed by the third NFC host using the NFCC.

The NFC host 1000 is the first NFC host.

Further, in another implementation manner, the first receiving module 1001 is further configured to: after the first sending module sends the state resetting command to the NFCC, receive an idle state notification message sent by the NFCC, where the idle state notification message is sent by the NFCC to the first NFC host after the NFCC restores to the idle state; and
the first sending module 1003 is further configured to send the first radio frequency discovery command to the NFCC after the first receiving module 1001 receives the idle state notification message.

Further, in another implementation manner, the first sending module 1003 is further configured to: after the first receiving module 1001 acquires the state information used to indicate the state of the NFCC, send the first radio frequency discovery command to the NFCC if the state of the NFCC is idle.

Further, in another implementation manner, the NFC host 1000 further includes a first comparing module 1005.

The first receiving module 1001 is further configured to: after the first sending module 1003 sends the first radio frequency discovery command to the NFCC, receive a first response message that is sent by the NFCC and includes identity information of a second NFC host, where the first response message is sent by the NFCC to the first NFC host when the NFCC receives the first radio frequency discovery command and a second radio frequency discovery command that collides with the first radio frequency discovery command, where the second radio frequency discovery command is sent by the second NFC host to the NFCC.

The first comparing module 1005 is configured to compare the priority of the first NFC host with a priority of the second NFC host according to the identity information of the first NFC host and the identity information of the second NFC host.

The first sending module 1003 is further configured to: if the first comparing module 1005 learns that the priority of the first NFC host is higher than the priority of the second NFC host, send the first radio frequency discovery command to the NFCC again, so that the NFCC executes a radio frequency discovery process according to the first radio frequency discovery command.

Further, the first sending module 1003 is further configured to: before the first receiving module 1001 acquires the state information used to indicate the state of the NFCC, send to the NFCC a state acquiring request used to acquire the state information; or is further configured to: before the first receiving module 1001 acquires the state information used to indicate the state of the NFCC, send a state notification configuration command to the NFCC, so that the NFCC sends the state information of the NFCC to the first NFC host when the state of the NFCC changes.

The first receiving module 1001 may be specifically configured to receive the state information that is sent by the NFCC and used to indicate the state of the NFCC.

Further, the first receiving module 1001 may be further specifically configured to receive the state information that is used to indicate the state of the NFCC and sent by the NFCC when the state of the NFCC changes.

A first NFC host provided by the embodiment of the present invention is configured to implement the methods of the embodiments shown in FIG. 1 and FIG. 2. For the specific operating principle and operating process of the first NFC host and a technical effect produced by the first NFC host, reference may be made to the embodiments shown in FIG. 1 and FIG. 2, and details are not described herein again.

The first NFC host provided by the embodiment of the present invention may not send a radio frequency discovery command to an NFCC, and may also control the NFCC to terminate a current radio frequency communication process when learning that a state of the NFCC is non-idle, thereby avoiding a collision problem that occurs in a multi-host architecture when an NFC host controls the NFCC to perform radio frequency communication.

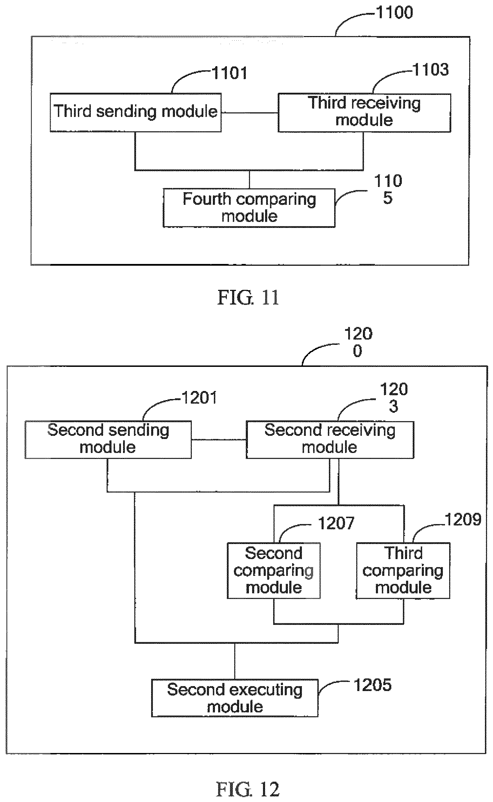

FIG. 11 is a schematic structural diagram of another NFC host according to an embodiment of the present invention. As shown in FIG. 11, an NFC host 1100 includes a third sending module 1101 and a third receiving module 1003.

The NFC host performs communication externally by using the third sending module 1101 and the third receiving module 1103.

The third sending module 1101 is configured to send a first radio frequency discovery command to an NFCC.

The third sending module 1101 is further configured to: after the first radio frequency discovery command is sent to the NFCC, if a state of the NFCC is non-idle, and a first NFC host learns, according to identity information of the first NFC host and identity information of a third NFC host, that a priority of the first NFC host is higher than a priority of the third NFC host, send a state resetting command to the NFCC, so that the NFCC terminates a current radio frequency communication process and restores to an idle state, where the third NFC host is an NFC host corresponding to the radio frequency communication process currently executed by the NFCC, and the identity information of the third NFC host is sent by the NFCC to the first NFC host in the radio frequency communication process performed by the third NFC host using the NFCC.

The NFC host 1100 is the first NFC host.

Further, the third receiving module 1103 is further configured to receive an idle state notification message sent by the NFCC after the NFCC restores to the idle state; and
the third sending module 1101 is further configured to send the first radio frequency discovery command to the NFCC after the third receiving module 1103 receives the idle state notification message.

Further, the third sending module 1101 is further configured to: if the state of the NFCC is idle, the NFCC further receives a second radio frequency discovery command that is sent by a second NFC host and collides with the first radio frequency discovery command, and the priority of the first NFC host is higher than a priority of the second NFC host, send the first radio frequency discovery command to the NFCC again, so that the NFCC executes a radio frequency discovery process according to the first radio frequency discovery command.

Further, the NFC host 1100 further includes a fourth comparing module 1105.

The third receiving module 1103 is further configured to: if the state of the NFCC is idle, and the NFCC receives the first radio frequency discovery command and the second radio frequency discovery command that is sent by the second NFC host and collides with the first radio frequency discovery command, receive a first response message that is sent by the NFCC and includes identity information of the second NFC host.

The fourth comparing module 1105 is configured to compare the priority of the first NFC host with the priority of the second NFC host according to the identity information of the first NFC host and the identity information of the second NFC host that is received by the third receiving module 1103.

The third sending module 1101 is specifically configured to send the first radio frequency discovery command to the NFCC again if the fourth comparing module 1105 learns that the priority of the first NFC host is higher than the priority of the second NFC host.

A first NFC host provided by the embodiment of the present invention is configured to implement the methods of the embodiments shown in FIG. 3 and FIG. 4A and FIG. 4B. For the specific operating principle and operating process of the first NFC host and a technical effect produced by the first NFC host, reference may be made to the embodiments shown in FIG. 3 and FIG. 4A and FIG. 4B, and details are not described herein again.

In the embodiment of the present invention, after an NFCC in an idle state receives radio frequency discovery commands sent by multiple NFC hosts, a first NFC host of a highest priority may send the radio frequency discovery command to the NFCC again, so that the NFCC may perform a radio frequency discovery process according to the radio frequency discovery command sent by the NFC host of the highest priority. Therefore, a collision problem that occurs in a multi-host architecture when an NFC host controls the NFCC to perform radio frequency communication may be avoided.

FIG. 12 is a schematic structural diagram of an NFCC. As shown in FIG. 12, an NFCC 1200 includes a second sending module 1201, a second receiving module 1203, and a second executing module 1205.

The NFCC may perform communication externally by using the second sending module 1201 and the second receiving module 1203.

The second executing module 1205 is configured to terminate a current radio frequency communication process if a state of the NFCC is non-idle, the second receiving module 1203 receives a first radio frequency discovery command or a state acquiring request sent by a first NFC host, and a priority of the first NFC host is higher than a priority of a third NFC host, where the third NFC host is an NFC host corresponding to the radio frequency communication process currently executed by the NFCC.

Further, the second sending module 1201 is configured to:
send, according to the state acquiring request that is sent by the first NFC host and used to acquire state information, the state information used to indicate the state of the NFCC to the first NFC host; or
send, according to a state notification configuration command sent by the first NFC host, state information of the NFCC to the first NFC host when the state of the NFCC changes; or
send state information used to indicate the state of the NFCC to the first NFC host when the state of the NFCC changes.

Further, the second sending module 1201 is further configured to: if the state of the NFCC is non-idle, and the second receiving module 1203 receives the first radio frequency discovery command or the state acquiring request sent by the first NFC host, send a second response message including identity information of the third NFC host to the first NFC host, so that the first NFC host compares the priority of the first NFC host with the priority of the third NFC host, where the third NFC host is the NFC host corresponding to the radio frequency communication process currently executed by the NFCC;
the second receiving module 1203 is further configured to receive a state resetting command sent by the first NFC host if the priority of the first NFC host is higher than the priority of the third NFC host; and
the second executing module 1205 is specifically configured to terminate the current radio frequency communication process according to the state resetting command received by the second receiving module, and restore the NFCC to an idle state.

Further, the NFCC 1200 may further include a third comparing module 1209.

The third comparing module 1209 is configured to compare the priority of the first NFC host with the priority of the third NFC host if the state of the NFCC is non-idle, and the second receiving module 1203 receives the first radio frequency discovery command or the state acquiring request sent by the first NFC host.

The second executing module 1205 is further configured to terminate the current radio frequency communication process if the third comparing module 1209 learns that the priority of the first NFC host is higher than the priority of the third NFC host, where the third NFC host is the NFC host corresponding to the radio frequency communication process currently executed by the NFCC. Alternatively, the second executing module 1205 is further configured to: if the third comparing module 1209 learns that the priority of the first NFC host is higher than the priority of the third NFC host, terminate the current radio frequency communication process, and execute a radio frequency discovery process according to the first radio frequency discovery command sent by the first NFC host.

Further, the second executing module 1205 is further configured to: after terminating the current radio frequency communication process, execute a radio frequency discovery process according to the first radio frequency discovery command sent by the first NFC host.

Further, the second sending module 1201 is further configured to: if the state of the NFCC is non-idle, and the second receiving module 1203 receives the first radio frequency discovery command or the state acquiring request sent by the first NFC host, send a second response message including identity information of the third NFC host to the first NFC host, so that the first NFC host compares the priority of the first NFC host with the priority of the third NFC host, where the third NFC host is the NFC host corresponding to the radio frequency communication process currently executed by the NFCC.

The second receiving module 1203 is further configured to receive a state resetting command sent by the first NFC host if the priority of the first NFC host is higher than the priority of the third NFC host.

The second executing module 1205 is specifically configured to terminate the current radio frequency communication process according to the state resetting command received by the second receiving module, and restores the NFCC to an idle state.

The second sending module 1201 is further configured to send an idle state notification message to the first NFC host after the NFCC restores to the idle state.

The second receiving module 1203 is further configured to receive the first radio frequency discovery command that is sent by the first NFC host according to the idle state notification message.

The second executing module 1205 is specifically configured to execute the radio frequency discovery process according to the first radio frequency discovery command that is received by the second receiving module after the NFCC restores to the idle state.

Further, the second executing module 1205 is further configured to execute a radio frequency discovery process according to the first radio frequency discovery command if the state of the NFCC is idle, the second receiving module 1203 receives the first radio frequency discovery command sent by the first NFC host and a second radio frequency discovery command that is sent by a second NFC host and collides with the first radio frequency discovery command, and the priority of the first NFC host is higher than a priority of the second NFC host.

Further, the second sending module 1201 is further configured to: if the state of the NFCC is idle, and the second receiving module 1203 receives the first radio frequency discovery command sent by the first NFC host and the second radio frequency discovery command that is sent by the second NFC host and collides with the first radio frequency discovery command, send a first response message including identity information of the second NFC host to the first NFC host, so that the first NFC host compares the priority of the first NFC host with the priority of the second NFC host according to identity information of the first NFC host and the identity information of the second NFC host.

The second receiving module 1203 is further configured to receive the first radio frequency discovery command sent by the first NFC host again if the priority of the first NFC host is higher than the priority of the second NFC host.

The second executing module 1205 is configured to execute the radio frequency discovery process according to the first radio frequency discovery command received by the second receiving module 1203 again.

Further, the NFCC 1200 further includes a second comparing module 1207.

The second comparing module 1207 is configured to compare the priority of the first NFC host with the priority of the second NFC host if the state of the NFCC is idle, and the second receiving module 1203 receives the first radio frequency discovery command sent by the first NFC host and the second radio frequency discovery command that is sent by the second NFC host and collides with the first radio frequency discovery command.

The second executing module 1205 is configured to execute the radio frequency discovery process according to a radio frequency discovery command sent by an NFC host of a higher priority learned by the second comparing module 1207.

It should be noted that the second comparing module 1207 and the third comparing module 1209 may be a same function module, where the function module is configured to compare priorities of hosts.

An NFCC provided by the embodiment of the present invention is configured to implement the methods of the embodiments shown in FIG. 1 to FIG. 4A and FIG. 4B. For the specific operating principle and operating process of the NFCC and a technical effect produced by the NFCC, reference may be made to the embodiments shown in FIG. 1 to FIG. 4A and FIG. 4B, and details are not described herein again.

An embodiment of the present invention further provides another terminal device, where the terminal device includes the first NFC host shown in FIG. 10 or FIG. 11, the NFCC shown in FIG. 12, and a second NFC host and a third NFC host.

It should be noted that the second NFC host and third NFC host may be a same NFC host, and may also be different NFC hosts.

For the specific operating principle and operating process of the terminal device provided by the embodiment of the present invention and a technical effect produced by the terminal device, reference may be made to the description in the foregoing method embodiments, and details are not described herein again.

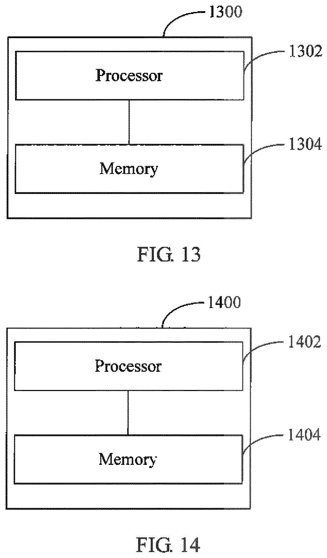

FIG. 13 is a schematic structural diagram of another NFC host according to an embodiment of the present invention. As shown in FIG. 13, the NFC host 1300 is a first NFC host, and the NFC host includes:
one or more processors 1302;
a memory 1304, and
one or more programs, where the one or more programs are stored in the memory 1304 and are configured to be executed by the one or more processors 1302, and the one or more programs include:
   an instruction for acquiring state information used to indicate a state of an NFCC; and
   an instruction for skipping, by the first NFC host, sending a first radio frequency discovery command to the NFCC if the state of the NFCC is non-idle;
      or
   if a state of the NFCC is non-idle, and the first NFC host learns, according to identity information of the first NFC host and identity information of a third NFC host, that a priority of the first NFC host is higher than a priority of the third NFC host, an instruction for sending, by the first NFC host, a state resetting command to the NFCC, so that the NFCC terminates a current radio frequency communication process and restores to an idle state, where the third NFC host is an NFC host corresponding to the radio frequency communication process currently executed by the NFCC, and the identity information of the third NFC host is sent by the NFCC to the first NFC host in the radio frequency communication process performed by the third NFC host using the NFCC.

Further, the one or more programs may further include: after the sending, by the first NFC host, a state resetting command to the NFCC, so that the NFCC terminates a current radio frequency communication process and restores to an idle state, and after the first NFC host receives an idle state notification message sent by the NFCC, an instruction for sending, by the first NFC host, the first radio frequency discovery command to the NFCC, where the idle state notification message is sent by the NFCC to the first NFC host after the NFCC restores to the idle state.

Further, the one or more programs may further include: after the acquiring, by a first NFC host, state information used to indicate a state of an NFCC, an instruction for sending, by the first NFC host, the first radio frequency discovery command to the NFCC if the state of the NFCC is idle.

Further, the one or more programs may further include:
after the sending the first radio frequency discovery command to the NFCC if the state of the NFCC is idle, an instruction for receiving a first response message that is sent by the NFCC and includes identity information of a second NFC host, where the first response message is sent by the NFCC to the first NFC host when the NFCC receives the first radio frequency discovery command and a second radio frequency discovery command that collides with the first radio frequency discovery command, where the second radio frequency discovery command is sent by the second NFC host to the NFCC; and
if the first NFC host learns, according to the identity information of the first NFC host and the identity information of the second NFC host, that the priority of the first NFC host is higher than a priority of the second NFC host, an instruction for sending the first radio frequency discovery command to the NFCC again, so that the NFCC executes a radio frequency discovery process according to the first radio frequency discovery command.

Further, the one or more programs may further include:
before the acquiring state information used to indicate a state of an NFCC, an instruction for sending to the NFCC a state acquiring request used to acquire the state information; or before the acquiring state information used to indicate a state of an NFCC, an instruction for sending a state notification configuration command to the NFCC, so that the NFCC sends the state information of the NFCC to the first NFC host when the state of the NFCC changes; and
the instruction for acquiring state information used to indicate a state of an NFCC, may specifically include: an instruction for receiving the state information that is sent by the NFCC and used to indicate the state of the NFCC.

Further, the instruction for acquiring, by a first NFC host, state information used to indicate a state of an NFCC, may specifically include: an instruction for receiving, by the first NFC host, the state information that is used to indicate the state of the NFCC and sent by the NFCC when the state of the NFCC changes.

Further, the one or more programs may further include: when the first NFC host is a device host DH, and before the acquiring, by a first NFC host, state information used to indicate a state of an NFCC,
an instruction for sending, by the first NFC host, priority configuration information used to indicate priorities of all NFC hosts to the NFCC, so that the NFCC sends the priority configuration information to all other NFC hosts except the first NFC host, so that all the other NFC hosts compare priorities of multiple colliding NFC hosts according to the priority configuration information; or
an instruction for sending, by the first NFC host, priority configuration information used to indicate priorities of all NFC hosts to the NFCC, so that the NFCC compares priorities of multiple colliding NFC hosts according to the priority configuration information.

A first NFC host provided by the embodiment of the present invention is configured to implement the methods of the embodiments shown in FIG 1 and FIG. 2. For the specific operating principle and operating process of the first NFC host and a technical effect produced by the first NFC host, reference may be made to the embodiments shown in FIG. 1 and FIG. 2, and details are not described herein again.

FIG. 14 is a schematic structural diagram of another NFC host according to an embodiment of the present invention. As shown in FIG. 14, the NFC host is a first NFC host, and the NFC host 1400 includes:
one or more processors 1402;
a memory 1404, and
one or more programs, where the one or more programs are stored in the memory 1404 and are configured to be executed by the one or more processors 1402, and the one or more programs include:
   an instruction for sending a first radio frequency discovery command to an NFCC; and
   if a state of the NFCC is non-idle, and the first NFC host learns, according to identity information of the first NFC host and identity information of a third NFC host, that a priority of the first NFC host is higher than a priority of the third NFC host, an instruction for sending, by the first NFC host, a state resetting command to the NFCC, so that the NFCC terminates a current radio frequency communication process and restores to an idle state, where the third NFC host is an NFC host corresponding to the radio frequency communication process currently executed by the NFCC, and the identity information of the third NFC host is sent by the NFCC to the first NFC host in the radio frequency communication process performed by the third NFC host using the NFCC.

Further, the one or more programs may further include: after the sending, by the first NFC host, a state resetting command to the NFCC, so that the NFCC terminates a current radio frequency communication process and restores to an idle state, and after the first NFC host receives an idle state notification message sent by the NFCC, an instruction for sending, by the first NFC host, the first radio frequency discovery command to the NFCC again, where the idle state notification message is sent by the NFCC to the first NFC host after the NFCC restores to the idle state.

Further, the one or more programs may further include:
after the sending, by a first NFC host, a first radio frequency discovery command to an NFCC, an instruction for sending the first radio frequency discovery command to the NFCC again if the state of the NFCC is idle, the NFCC further receives a second radio frequency discovery command that is sent by a second NFC host and collides with the first radio frequency discovery command, and the priority of the first NFC host is higher than a priority of the second NFC host, so that the NFCC executes a radio frequency discovery process according to the first radio frequency discovery command.

Further, the instruction for sending, by the first NFC, the first radio frequency discovery command to the NFCC again if the state of the NFCC is idle, the
NFCC further receives a second radio frequency discovery command that is sent by a second NFC host and collides with the first radio frequency discovery command, and the priority of the first NFC host is higher than a priority of the second NFC host, so that the NFCC executes a radio frequency discovery process according to the first radio frequency discovery command, specifically includes:
an instruction for receiving a first response message that is sent by the NFCC and includes identity information of the second NFC host if the state of the NFCC is idle, and the NFCC receives the first radio frequency discovery command and the second radio frequency discovery command that is sent by the second NFC host and collides with the first radio frequency discovery command; and
an instruction for sending the first radio frequency discovery command to the NFCC again if the first NFC host learns, according to the identity information of the first NFC host and the identity information of the second NFC host, that the priority of the first NFC host is higher than the priority of the second NFC host.

A first NFC host provided by the embodiment of the present invention is configured to implement the methods of the embodiments shown in FIG. 3 and FIG. 4A and FIG. 4B. For the specific operating principle and operating process of the first NFC host and a technical effect produced by the first NFC host, reference may be made to the embodiments shown in FIG. 3 and FIG. 4A and FIG. 4B, and details are not described herein again.

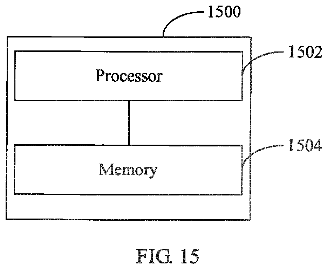

FIG. 15 is a schematic structural diagram of another NFCC. As shown in FIG. 15, an NFCC 1500 includes:
one or more processors 1502;
a memory 1504, and
one or more programs, where the one or more programs are stored in the memory 1504 and are configured to be executed by the one or more processors 1502, and the one or more programs include:
   an instruction for terminating, by the NFCC, a current radio frequency communication process if a state of the NFCC is non-idle, the NFCC receives a first radio frequency discovery command or a state acquiring request sent by a first NFC host, and a priority of the first NFC host is higher than a priority of a third NFC host, where the third NFC host is an NFC host corresponding to the radio frequency communication process currently executed by the NFCC.

Further, the one or more programs may further include:
an instruction for sending, by the NFCC according to the state acquiring request that is sent by the first NFC host and used to acquire state information, the state information used to indicate the state of the NFCC to the first NFC host; or
an instruction for sending, by the NFCC according to a state notification configuration command sent by the first NFC host, state information of the NFCC to the first NFC host when the state of the NFCC changes; or
an instruction for sending, by the NFCC, state information used to indicate the state of the NFCC to the first NFC host when the state of the NFCC changes.

Further, the instruction for terminating, by the NFCC, a current radio frequency communication process if a state of the NFCC is non-idle, the NFCC receives a first radio frequency discovery command or a state acquiring request sent by a first NFC host, and a priority of the first NFC host is higher than a priority of a third NFC host, may specifically include:
if the state of the NFCC is non-idle, and the NFCC receives the first radio frequency discovery command or the state acquiring request sent by the first NFC host, an instruction for returning, by the NFCC, a second response message including identity information of the third NFC host to the first NFC host, so that the first NFC host compares the priority of the first NFC host with the priority of the third NFC host, where the third NFC host is the NFC host corresponding to the radio frequency communication process currently executed by the NFCC; and
if the priority of the first NFC host is higher than the priority of the third NFC host, an instruction for receiving, by the NFCC, a state resetting command sent by the first NFC host, and terminating the current radio frequency communication process according to the state resetting command;
   or
if the state of the NFCC is non-idle, and the NFCC receives the first radio frequency discovery command sent by the first NFC host, an instruction for comparing, by the NFCC, the priority of the first NFC host with the priority of the third NFC host, and if the priority of the first NFC host is higher than the priority of the third NFC host, terminating, by the NFCC, the current radio frequency communication process, where the third NFC host is the NFC host corresponding to the radio frequency communication process currently executed by the NFCC;
   or
if the state of the NFCC is non-idle, and the NFCC receives the state acquiring request sent by the first NFC host, an instruction for comparing, by the NFCC, the priority of the first NFC host with the priority of the third NFC host, and if the priority of the first NFC host is higher than the priority of the third NFC host, terminating, by the NFCC, the current radio frequency communication process, where the third NFC host is the NFC host corresponding to the radio frequency communication process currently executed by the NFCC.

Further, the one or more programs may further include:
after the terminating, by the NFCC, a current radio frequency communication process, an instruction for executing, by the NFCC, a radio frequency discovery process according to the first radio frequency discovery command sent by the first NFC host.

Further, the instruction for terminating, by the NFCC, a current radio frequency communication process if a state of the NFCC is non-idle, the NFCC receives a first radio frequency discovery command or a state acquiring request sent by a first NFC host, and a priority of the first NFC host is higher than a priority of a third NFC host, and executing, by the NFCC, a radio frequency discovery process according to the first radio frequency discovery command sent by the first NFC host, may specifically include:
if the state of the NFCC is non-idle, and the NFCC receives the first radio frequency discovery command or the state acquiring request sent by the first NFC host, an instruction for returning, by the NFCC, a second response message including identity information of the third NFC host to the first NFC host, so that the first NFC host compares the priority of the first NFC host with the priority of the third NFC host, where the third NFC host is the NFC host corresponding to the radio frequency communication process currently executed by the NFCC;
if the priority of the first NFC host is higher than the priority of the third NFC host, an instruction for receiving, by the NFCC, a state resetting command sent by the first NFC host, and terminating the current radio frequency communication process according to the state resetting command; and
an instruction for sending, by the NFCC after the NFCC terminates the current radio frequency communication process, an idle state notification message to the first NFC host, receiving the first radio frequency discovery command that is sent by the first NFC host according to the idle state notification message, and executing the radio frequency discovery process according to the first radio frequency discovery command;
   or
if the state of the NFCC is non-idle, and the NFCC receives the first radio frequency discovery command sent by the first NFC host, an instruction for comparing, by the NFCC, the priority of the first NFC host with the priority of the third NFC host, and if the priority of the first NFC host is higher than the priority of the third NFC host, terminating, by the NFCC, the current radio frequency communication process, and executing the radio frequency discovery process according to the first radio frequency discovery command sent by the first NFC host, where the third NFC host is the NFC host corresponding to the radio frequency communication process currently executed by the NFCC;
   or
if the state of the NFCC is non-idle, and the NFCC receives the state acquiring request sent by the first NFC host, an instruction for comparing, by the NFCC, the priority of the first NFC host with the priority of the third NFC host; if the priority of the first NFC host is higher than the priority of the third NFC host, terminating, by the NFCC, the current radio frequency communication process, and sending an idle state notification message to the first NFC host, so that the first NFC host sends the first radio frequency discovery command to the NFCC; and executing, by the NFCC, the radio frequency discovery process according to the first radio frequency discovery command sent by the first NFC host, where the third NFC host is the NFC host corresponding to the radio frequency communication process currently executed by the NFCC.

Further, the one or more programs may further include:
an instruction for executing a radio frequency discovery process according to the first radio frequency discovery command if the state of the NFCC is idle, the NFCC receives the first radio frequency discovery command sent by the first NFC host and a second radio frequency discovery command that is sent by a second NFC host and collides with the first radio frequency discovery command, and the priority of the first NFC host is higher than a priority of the second NFC host.

Further, the instruction for executing, by the NFCC, a radio frequency discovery process according to the first radio frequency discovery command if the state of the NFCC is idle, the NFCC receives the first radio frequency discovery command sent by the first NFC host and a second radio frequency discovery command that is sent by a second NFC host and collides with the first radio frequency discovery command, and the priority of the first NFC host is higher than a priority of the second NFC host, specifically includes:
if the state of the NFCC is idle, and the NFCC receives the first radio frequency discovery command sent by the first NFC host and the second radio frequency discovery command that is sent by the second NFC host and collides with the first radio frequency discovery command, an instruction for sending a first response message including identity information of the second NFC host to the first NFC host, so that the first NFC host compares the priority of the first NFC host with the priority of the second NFC host according to identity information of the first NFC host and the identity information of the second NFC host; and
if the priority of the first NFC host is higher than the priority of the second NFC host, an instruction for receiving the first radio frequency discovery command sent by the first NFC again, and executing the radio frequency discovery process according to the first radio frequency discovery command.

Alternatively, further, the instruction for executing, by the NFCC, a radio frequency discovery process according to the first radio frequency discovery command if the state of the NFCC is idle, the NFCC receives the first radio frequency discovery command sent by the first NFC host and a second radio frequency discovery command that is sent by a second NFC host and collides with the first radio frequency discovery command, and the priority of the first NFC host is higher than a priority of the second NFC host, may specifically include:
if the state of the NFCC is idle, and the NFCC receives the first radio frequency discovery command sent by the first NFC host and the second radio frequency discovery command that is sent by the second NFC host and collides with the first radio frequency discovery command, an instruction for comparing the priority of the first NFC host with the priority of the second NFC host, and executing the radio frequency discovery process according to a radio frequency discovery command sent by an NFC host of a higher priority.

An NFCC provided by the embodiment of the present invention is configured to implement the methods of the embodiments shown in FIG. 1 to FIG. 4A and FIG. 4B. For the specific operating principle and operating process of the NFCC and a technical effect produced by the NFCC, reference may be made to the embodiments shown in FIG. 1 to FIG. 4A and FIG. 4B, and details are not described herein again.

With descriptions of the foregoing embodiments, a person skilled in the art may clearly understand that the present invention may be implemented by hardware, firmware or a combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a computer. The following provides an example but does not impose a limitation: The computer-readable medium may include a RAM, a ROM, an EEPROM, a CD-ROM, or another optical disc storage or a disk storage medium, or another magnetic storage device, or any other medium that can carry or store expected program code in a form of an instruction or a data structure and can be accessed by a computer. In addition, any connection may be appropriately defined as a computer-readable medium. For example, if software is transmitted from a website, a server or another remote source by using a coaxial cable, an optical fiber/cable, a twisted pair, a digital subscriber line (DSL) or wireless technologies such as infrared ray, radio and microwave, the coaxial cable, optical fiber/cable, twisted pair, DSL or wireless technologies such as infrared ray, radio and microwave are included in fixation of a medium to which they belong. For example, a disk (disk) and disc (disc) used by the present invention includes a compact disc CD, a laser disc, an optical disc, a digital versatile disc (DVD), a floppy disk and a Blu-ray disc, where the disk generally copies data by a magnetic means, and the disc copies data optically by a laser means. The foregoing combination should also be included in the protection scope of the computer-readable medium.

In short, the foregoing descriptions are merely exemplary embodiments of the present invention, but are not intended to limit the protection scope of the present invention, which is defined by the appended claims.

## Claims

1. A method for controlling near field communication, NFC, radio frequency discovery, comprising:
acquiring, by a first NFC host, state information used to indicate a state of a near field communication controller, NFCC (101); and
if the state of the NFCC is non-idle, and the first NFC host learns, according to identity information of the first NFC host and identity information of a third NFC host, that a priority of the first NFC host is higher than a priority of the third NFC host, sending, by the first NFC host, a state resetting command to the NFCC, so that the NFCC terminates a current radio frequency communication process and restores to an idle state, wherein the third NFC host is an NFC host corresponding to the radio frequency communication process currently executed by the NFCC, and the identity information of the third NFC host is sent by the NFCC to the first NFC host.

2. The method according to claim 1, wherein after the sending, by the first NFC host, a state resetting command to the NFCC, so that the NFCC terminates a current radio frequency communication process and restores to an idle state, the method further comprises:
after the first NFC host receives an idle state notification message sent by the NFCC, sending, by the first NFC host, the first radio frequency discovery command to the NFCC, wherein the idle state notification message is sent by the NFCC to the first NFC host after the NFCC restores to the idle state.

3. The method according to claim 1 or 2, wherein after the acquiring, by a first NFC host, state information used to indicate a state of an NFCC, the method further comprises:
sending, by the first NFC host, the first radio frequency discovery command to the NFCC if the state of the NFCC is idle;
receiving, by the first NFC host, a first response message that is sent by the NFCC and comprises identity information of a second NFC host, wherein the first response message is sent by the NFCC to the first NFC host when the NFCC receives the first radio frequency discovery command and a second radio frequency discovery command that collides with the first radio frequency discovery command, wherein the second radio frequency discovery command is sent by the second NFC host to the NFCC; and
if the first NFC host learns, according to the identity information of the first NFC host and the identity information of the second NFC host, that the priority of the first NFC host is higher than a priority of the second NFC host, sending, by the first NFC host, the first radio frequency discovery command to the NFCC again, so that the NFCC executes a radio frequency discovery process according to the first radio frequency discovery command.

4. The method according to any one of claims 1 to 3, wherein the first NFC host is a device host DH, and before the acquiring, by a first NFC host, state information used to indicate a state of an NFCC, the method further comprises:
sending, by the first NFC host, priority configuration information used to indicate priorities of all NFC hosts to the NFCC, so that the NFCC sends the priority configuration information to all other NFC hosts except the first NFC host, so that all the other NFC hosts compare priorities of multiple colliding NFC hosts according to the priority configuration information; or
sending, by the first NFC host, priority configuration information used to indicate priorities of all NFC hosts to the NFCC, so that the NFCC compares priorities of multiple colliding NFC hosts according to the priority configuration information.

5. A near field communication, NFC, host, comprising:
a first receiving module (1001), configured to acquire state information used to indicate a state of a near field communication controller, NFCC; and
a first sending module (1003), configured to: after the first receiving module acquires the state information used to indicate the state of the NFCC, if the state of the NFCC is non-idle, and a first NFC host learns, according to identity information of the first NFC host and identity information of a third NFC host, that a priority of the first NFC host is higher than a priority of the third NFC host, send a state resetting command to the NFCC, so that the NFCC terminates a current radio frequency communication process and restores to an idle state, wherein the third NFC host is an NFC host corresponding to the radio frequency communication process currently executed by the NFCC, and the identity information of the third NFC host is sent by the NFCC to the first NFC host,
wherein
the NFC host is the first NFC host.

6. The NFC host according to claim 5, wherein:
the first receiving module is further configured to: after the first sending module sends the state resetting command to the NFCC, receive an idle state notification message sent by the NFCC, wherein the idle state notification message is sent by the NFCC to the first NFC host after the NFCC restores to the idle state; and
the first sending module is further configured to send the first radio frequency discovery command to the NFCC after the first receiving module receives the idle state notification message.

7. The NFC host according to claim 5 or 6, wherein:
the first sending module is further configured to: after the first receiving module acquires the state information used to indicate the state of the NFCC, send the first radio frequency discovery command to the NFCC if the state of the NFCC is idle; and
the NFC host further comprises a first comparing module (1005), wherein:
the first receiving module is further configured to: after the first sending module sends the first radio frequency discovery command to the NFCC, receive a first response message that is sent by the NFCC and comprises identity information of a second NFC host, wherein the first response message is sent by the NFCC to the first NFC host when the NFCC receives the first radio frequency discovery command and a second radio frequency discovery command that collides with the first radio frequency discovery command, wherein the second radio frequency discovery command is sent by the second NFC host to the NFCC;
the first comparing module is configured to compare the priority of the first NFC host with a priority of the second NFC host according to the identity information of the first NFC host and the identity information of the second NFC host; and
the first sending module is further configured to: if the first comparing module learns that the priority of the first NFC host is higher than the priority of the second NFC host, send the first radio frequency discovery command to the NFCC again, so that the NFCC executes a radio frequency discovery process according to the first radio frequency discovery command.

## Patentansprüche

1. Verfahren zum Steuern der Hochfrequenzerkennung über Nahfeldkommunikation, NFC (Near Field Communication), umfassend:
Erfassen, durch einen ersten NFC-Host, von Zustandsinformationen, die verwendet werden, um einen Zustand eines Nahfeldkommunikationscontrollers, NFCC (Near Field Communication Controller) (101), anzuzeigen; und
falls der Zustand des NFCC ein Nicht-Ruhezustand ist und der erste NFC-Host gemäß Identitätsinformationen des ersten NFC-Hosts und Identitätsinformationen eines dritten NFC-Hosts lernt, dass eine Priorität des ersten NFC-Hosts höher als eine Priorität des dritten NFC-Hosts ist, Senden, durch den ersten NFC-Host, eines Zustandsrücksetzbefehls an den NFCC, so dass der NFCC einen aktuellen Hochfrequenzkommunikationsprozess beendet und einen Ruhezustand wiederherstellt, wobei der dritte NFC-Host ein NFC-Host ist, der dem Hochfrequenzkommunikationsprozess entspricht, der aktuell vom NFCC ausgeführt wird, und die Identitätsinformationen des dritten NFC-Hosts vom NFCC an den ersten NFC-Host gesendet werden.

2. Verfahren nach Anspruch 1, wobei nach dem Senden, durch den ersten NFC-Host, eines Zustandsrücksetzbefehls an den NFCC, so dass der NFCC einen aktuellen Hochfrequenzkommunikationsprozess beendet und einen Ruhezustand wiederherstellt, das Verfahren ferner umfasst:
nachdem der erste NFC-Host eine vom NFCC gesendete Ruhezustandsbenachrichtigungsnachricht empfangen hat, Senden, durch den ersten NFC-Host, des ersten Hochfrequenzerkennungsbefehls an den NFCC, wobei die Ruhezustandsbenachrichtigungsnachricht vom NFCC an den ersten NFC-Host gesendet wird, nachdem der NFCC den Ruhezustand wiederhergestellt hat.

3. Verfahren nach Anspruch 1 oder 2, wobei nach dem Erfassen, durch einen ersten NFC-Host, von Zustandsinformationen, die zum Anzeigen eines Zustands eines NFCC verwendet werden, das Verfahren ferner umfasst:
Senden, durch den ersten NFC-Host, des ersten Hochfrequenzerkennungsbefehls an den NFCC, falls der Zustand des NFCC ein Ruhezustand ist;
Empfangen, durch den ersten NFC-Host, einer ersten Antwortnachricht, die vom NFCC gesendet wird und Identitätsinformationen eines zweiten NFC-Hosts umfasst, wobei die erste Antwortnachricht vom NFCC an den ersten NFC-Host gesendet wird, wenn der NFCC den ersten Hochfrequenzerkennungsbefehl und einen zweiten Hochfrequenzerkennungsbefehl empfängt, der mit dem ersten Hochfrequenzerkennungsbefehl kollidiert, wobei der zweite Hochfrequenzerkennungsbefehl vom zweiten NFC-Host an den NFCC gesendet wird; und
falls der erste NFC-Host gemäß den Identitätsinformationen des ersten NFC-Hosts und den Identitätsinformationen des zweiten NFC-Hosts lernt, dass die Priorität des ersten NFC-Hosts höher als eine Priorität des zweiten NFC-Hosts ist, erneutes Senden, durch den ersten NFC-Host, des ersten Hochfrequenzerkennungsbefehls an den NFCC, so dass der NFCC einen Hochfrequenzerkennungsprozess gemäß dem ersten Hochfrequenzerkennungsbefehl ausführt.

4. Verfahren nach einem der Ansprüche 1 bis 3, wobei der erste NFC-Host ein Geräte-Host DH ist, und vor dem Erfassen, durch einen ersten NFC-Host, von Zustandsinformationen, die verwendet werden, um einen Zustand eines NFCC anzuzeigen, das Verfahren ferner umfasst:
Senden, durch den ersten NFC-Host, von Prioritätskonfigurationsinformationen, die verwendet werden, um dem NFCC Prioritäten aller NFC-Hosts anzuzeigen, so dass der NFCC die Prioritätskonfigurationsinformationen an alle anderen NFC-Hosts mit Ausnahme des ersten NFC-Hosts sendet, so dass alle anderen NFC-Hosts die Prioritäten mehrerer kollidierender NFC-Hosts gemäß den Prioritätskonfigurationsinformationen vergleichen; oder
Senden, durch den ersten NFC-Host, von Prioritätskonfigurationsinformationen, die verwendet werden, um dem NFCC Prioritäten aller NFC-Hosts anzuzeigen, so dass der NFCC die Prioritäten mehrerer kollidierender NFC-Hosts gemäß den Prioritätskonfigurationsinformationen vergleicht.

5. Host für Nahfeldkommunikation, NFC (Near Field Communication), umfassend:
ein erstes Empfangsmodul (1001), das ausgelegt ist, um Zustandsinformationen zu erfassen, die verwendet werden, um einen Zustand eines Nahfeldkommunikationscontrollers, NFCC (Near Field Communication Controller), anzuzeigen; und
ein erstes Sendemodul (1003), das ausgelegt ist zum: nachdem das erste Empfangsmodul die Zustandsinformationen erfasst, die verwendet werden, um den Zustand des NFCC anzuzeigen, falls der Zustand des NFCC ein Nicht-Ruhezustand ist und ein erster NFC-Host gemäß Identitätsinformationen des ersten NFC-Hosts und Identitätsinformationen eines dritten NFC-Hosts lernt, dass eine Priorität des ersten NFC-Hosts höher als eine Priorität des dritten NFC-Hosts ist, Senden eines Zustandsrücksetzbefehls an den NFCC, so dass der NFCC einen aktuellen Hochfrequenzkommunikationsprozess beendet und einen Ruhezustand wiederherstellt, wobei der dritte NFC-Host ein NFC-Host ist, der dem Hochfrequenzkommunikationsprozess entspricht, der aktuell vom NFCC ausgeführt wird, und die Identitätsinformationen des dritten NFC-Hosts vom NFCC an den ersten NFC-Host gesendet werden,
wobei
der NFC-Host der erste NFC-Host ist.

6. NFC-Host nach Anspruch 5, wobei:
das erste Empfangsmodul ferner ausgelegt ist zum: nachdem das erste Sendemodul den Zustandsrücksetzbefehl an den NFCC gesendet hat, Empfangen einer Ruhezustandsbenachrichtigungsnachricht, die vom NFCC gesendet wird, wobei die Ruhezustandsbenachrichtigungsnachricht vom NFCC an den ersten NFC-Host gesendet wird, nachdem der NFCC den Ruhezustand wiederhergestellt hat; und
das erste Sendemodul ferner ausgelegt ist, um den ersten Hochfrequenzerkennungsbefehl an den NFCC zu senden, nachdem das erste Empfangsmodul die Ruhezustandsbenachrichtigungsnachricht empfangen hat.

7. NFC-Host nach Anspruch 5 oder 6, wobei:
das erste Sendemodul ferner ausgelegt ist zum: nachdem das erste Empfangsmodul die Zustandsinformationen erfasst, die verwendet werden, um den Zustand des NFCC anzuzeigen, Senden des ersten Hochfrequenzerkennungsbefehls an den NFCC, falls der Zustand des NFCC ein Ruhezustand ist; und
der NFC-Host ferner ein erstes Vergleichsmodul (1005) umfasst, wobei:
das erste Empfangsmodul ferner ausgelegt ist zum: nachdem das erste Sendemodul den ersten Hochfrequenzerkennungsbefehl an den NFCC gesendet hat, Empfangen einer ersten Antwortnachricht, die vom NFCC gesendet wird und Identitätsinformationen eines zweiten NFC-Hosts umfasst, wobei die erste Antwortnachricht vom NFCC an den ersten NFC-Host gesendet wird, wenn der NFCC den ersten Hochfrequenzerkennungsbefehl und einen zweiten Hochfrequenzerkennungsbefehl empfängt, der mit dem ersten Hochfrequenzerkennungsbefehl kollidiert, wobei der zweite Hochfrequenzerkennungsbefehl vom zweiten NFC-Host an den NFCC gesendet wird;
das erste Vergleichsmodul ausgelegt ist, um die Priorität des ersten NFC-Hosts mit einer Priorität des zweiten NFC-Hosts gemäß den Identitätsinformationen des ersten NFC-Hosts und den Identitätsinformationen des zweiten NFC-Hosts zu vergleichen; und
das erste Sendemodul ferner ausgelegt ist zum: falls das erste Vergleichsmodul lernt, dass die Priorität des ersten NFC-Hosts höher als die Priorität des zweiten NFC-Hosts ist, erneuten Senden des ersten Hochfrequenzerkennungsbefehls an den NFCC, so dass der NFCC einen Hochfrequenzerkennungsprozess gemäß dem ersten Hochfrequenzerkennungsbefehl ausführt.

## Revendications

1. Procédé destiné à commander une découverte radiofréquence de communication en champ proche, NFC, comprenant :
l'acquisition, par un premier hôte NFC, d'informations d'état utilisées pour indiquer un état d'un contrôleur de communication en champ proche, NFCC (101) ; et
si l'état du NFCC est non inactif, et si le premier hôte NFC apprend, conformément aux informations d'identité du premier hôte NFC et aux informations d'identité d'un troisième hôte NFC, qu'une priorité du premier hôte NFC est supérieure à une priorité du troisième hôte NFC, l'envoi, par le premier hôte NFC, d'une commande de réinitialisation d'état au NFCC, de manière à ce que le NFCC termine un processus de communication radiofréquence actuel et repasse dans un état inactif, dans lequel le troisième hôte NFC est un hôte NFC correspondant au processus de communication radiofréquence actuellement exécuté par le NFCC, et les informations d'identité du troisième hôte NFC sont envoyées par le NFCC au premier hôte NFC.

2. Procédé selon la revendication 1, dans lequel, après l'envoi, par le premier hôte NFC, d'une commande de réinitialisation d'état au NFCC, de manière à ce que le NFCC termine un processus de communication radiofréquence actuel et repasse dans un état inactif, le procédé comprenant en outre :
après que le premier hôte NFC ait reçu un message de notification d'état inactif envoyé par le NFCC, l'envoi, par le premier hôte NFC, de la première commande de découverte radiofréquence au NFCC, dans lequel le message de notification d'état inactif est envoyé par le NFCC au premier hôte NFC après que le NFCC soit repassé à l'état inactif.

3. Procédé selon la revendication 1 ou 2, dans lequel, après l'acquisition, par un premier hôte NFC, d'informations d'état utilisées pour indiquer un état d'un NFCC, le procédé comprend en outre :
l'envoi, par le premier hôte NFC, de la première commande de découverte radiofréquence au NFCC si l'état du NFCC est inactif ;
la réception, par le premier hôte NFC, d'un premier message de réponse qui est envoyé par le NFCC et comprend des informations d'identité d'un deuxième hôte NFC, dans lequel le premier message de réponse est envoyé par le NFCC au premier hôte NFC lorsque le NFCC reçoit la première commande de découverte radiofréquence et une deuxième commande de découverte radiofréquence qui entre en collision avec la première commande de découverte radiofréquence, dans lequel la deuxième commande de découverte radiofréquence est envoyée par le deuxième hôte NFC au NFCC ; et
si le premier hôte NFC apprend, conformément aux informations d'identité du premier hôte NFC et aux informations d'identité du deuxième hôte NFC, que la priorité du premier hôte NFC est supérieure à une priorité du deuxième hôte NFC, l'envoi à nouveau, par le premier hôte NFC, de la première commande de découverte radiofréquence au NFCC, de manière à ce que le NFCC exécute un processus de découverte radiofréquence conformément à la première commande de découverte radiofréquence.

4. Procédé selon l'une quelconque des revendications 1 à 3, dans lequel le premier hôte NFC est un hôte de dispositif DH, et avant l'acquisition, par un premier hôte NFC, d'informations d'état utilisées pour indiquer un état d'un NFCC, le procédé comprend en outre :
l'envoi, par le premier hôte NFC, d'informations de configuration de priorité utilisées pour indiquer des priorités de tous les hôtes NFC au NFCC, de manière à ce que le NFCC envoie les informations de configuration de priorité à tous les autres hôtes NFC, excepté le premier hôte NFC, afin que tous autres hôtes NFC comparent des priorités de multiples hôtes NFC subissant une collision conformément aux informations de configuration de priorité ; ou
l'envoi, par le premier hôte NFC, d'informations de configuration de priorité utilisées pour indiquer des priorités de tous les hôtes NFC au NFCC, de manière à ce que le NFCC compare des priorités de multiples hôtes NFC subissant une collision conformément aux informations de configuration de priorité.

5. Hôte de communication en champ proche, NFC, comprenant :
un premier module de réception (1001), configuré pour acquérir des informations d'état utilisées pour indiquer un état d'un contrôleur de communication en champ proche, NFCC ; et
un premier module d'envoi (1003), configuré pour : après que le premier module de réception ait acquis les informations d'état utilisées pour indiquer l'état du NFCC, si l'état du NFCC est non inactif, et si un premier hôte NFC apprend, conformément aux informations d'identité du premier hôte NFC et aux informations d'identité d'un troisième hôte NFC, qu'une priorité du premier hôte NFC est supérieure à une priorité du troisième hôte NFC, envoyer une commande de réinitialisation d'état au NFCC, de manière à ce que le NFCC termine un processus de communication radiofréquence actuel et repasse dans un état inactif, dans lequel le troisième hôte NFC est un hôte NFC correspondant au processus de communication radiofréquence actuellement exécuté par le NFCC, et les informations d'identité du troisième hôte NFC sont envoyées par le NFCC au premier hôte NFC, dans lequel l'hôte NFC est le premier hôte NFC.

6. Hôte NFC selon la revendication 5, dans lequel :
le premier module de réception est en outre configuré pour : après que le premier module d'envoi ait envoyé la commande de réinitialisation d'état au NFCC, recevoir un message de notification d'état inactif envoyé par le NFCC, dans lequel le message de notification d'état inactif est envoyé par le NFCC au premier hôte NFC après que le NFCC soit repassé à l'état inactif ; et
le premier module d'envoi est en outre configuré pour envoyer la première commande de découverte radiofréquence au NFCC après que le premier module de réception a reçu le message de notification d'état inactif.

7. Hôte NFC selon la revendication 5 ou 6, dans lequel :
le premier module d'envoi est en outre configuré pour : après que le premier module de réception a acquis les informations d'état utilisées pour indiquer l'état du NFCC, envoyer la première commande de découverte radiofréquence au NFCC si l'état du NFCC est inactif ; et
l'hôte NFC comprend en outre un premier module de comparaison (1005), dans lequel :
le premier module de réception est en outre configuré pour : après que le premier module d'envoi ait envoyé la première commande de découverte radiofréquence au NFCC, recevoir un premier message de réponse qui est envoyé par le NFCC et comprend des informations d'identité d'un deuxième hôte NFC, dans lequel le premier message de réponse est envoyé par le NFCC au premier hôte NFC lorsque le NFCC reçoit la première commande de découverte radiofréquence et une deuxième commande de découverte radiofréquence qui entre en collision avec la première commande de découverte radiofréquence, dans lequel la deuxième commande de découverte radiofréquence est envoyée par le deuxième hôte NFC au NFCC ;
le premier module de comparaison est configuré pour comparer la priorité du premier hôte NFC à une priorité du deuxième hôte NFC conformément aux informations d'identité du premier hôte NFC et aux informations d'identité du deuxième hôte NFC ; et
le premier module d'envoi est en outre configuré pour : si le premier module de comparaison apprend que la priorité du premier hôte NFC est supérieure à la priorité du deuxième hôte NFC, envoyer à nouveau la première commande de découverte radiofréquence au NFCC, de manière à ce que le NFCC exécute un processus de découverte radiofréquence conformément à la première commande de découverte radiofréquence.
